# FASCICULE DE BREVET EUROPEEN

(11) **EP 3 077 161 B1**
(45) Date de publication et mention de la délivrance du brevet: **18.04.2018**
(21) Numéro de dépôt: 14809621.7
(22) Date de dépôt: 04.12.2014
(51) Int. Cl.: B25J 3/04, B25J 13/02, B25J 19/02

(54) **DISPOSITIF DE COMMANDE A RETOUR D'EFFORT MULTIDIRECTIONNEL**
STEUERUNGSVORRICHTUNG MIT MULTIDIREKTIONALER KRAFTRÜCKKOPPELUNG
CONTROL DEVICE WITH MULTIDIRECTIONAL FORCE FEEDBACK

(30) Priorité: 06.12.2013 FR 1362268
(43) Date de publication de la demande: 12.10.2016
(73) Titulaire: Commissariat à l'Énergie Atomique et aux Énergies Alternatives, 75015 Paris (FR)
(72) Inventeur: GONZALEZ, Franck, F-60110 Lormaison (FR); GOSSELIN, Florian, F-92170 Vanves (FR)
(74) Mandataire: Brevalex
(86) Numéro de dépôt international: PCT/EP2014/076621
(87) Numéro de publication internationale: WO 2015/082636

(56) Documents cités:
- DE-A1-102007 053 008
- FR-A1- 2 809 048
- US-A1- 2012 221 145
- MOTOKI TAKAGI ET AL: "A new encounter type haptic device with an actively driven pen-tablet LCD panel", ROBOTICS AND BIOMIMETICS (ROBIO), 2011 IEEE INTERNATIONAL CONFERENCE ON, IEEE, 7 décembre 2011 (2011-12-07), pages 2453-2458, XP032166171, DOI: 10.1109/ROBIO.2011.6181673 ISBN: 978-1-4577-2136-6 cité dans la demande

## Description

### DOMAINE TECHNIQUE ET ART ANTÉRIEUR

La présente invention se rapporte à un dispositif de commande à retour d'effort multidirectionnel pouvant être mis en oeuvre en tant qu'interface haptique, que bras maître d'un système maître-esclave ou en tant que dispositif de pilotage d'un robot collaboratif.

Les interfaces haptiques, les bras maîtres pour la téléopération et les robots collaboratifs sont formés de chaînes mécaniques poly-articulées comprenant plusieurs corps mobiles liés entre eux par des articulations passives ou motorisées reliant une base fixe ou mobile à une ou des poignées saisies par l'utilisateur. L'utilisateur saisit et déplace la ou les poignées dont les mouvements sont transmis à l'ensemble des corps du robot et mesurés en général par des capteurs articulaires ou disposés au niveau des moteurs. Cette mesure est utilisée pour générer un signal de commande d'un avatar en réalité virtuelle ou d'un robot distant en téléopération ou pour activer des modes d'assistance en cobotique. Lorsque l'avatar ou le robot distant entre en collision avec leur environnement ou lorsque l'on active des modes d'assistance, les moteurs du robot permettent d'appliquer un retour d'effort ou un guidage sur la main de l'utilisateur. Ces interfaces sont d'autant plus intuitives et efficaces qu'elles sont "transparentes", c'est à dire que l'utilisateur ne ressent pas leur présence et a l'impression d'intervenir directement dans l'environnement virtuel ou distant. Il doit en particulier pouvoir se déplacer aussi librement que possible en espace libre et ressentir clairement les contacts avec l'environnement. Cela requiert des conceptions spécifiques minimisant en particulier les frottements et l'inertie du robot.

Or la poignée, qui peut être par exemple une poignée standard ou un stylo, est liée de façon permanente au robot dont les corps sont eux-mêmes liés entre eux. Ainsi, lorsque l'utilisateur déplace la poignée pour commander son avatar ou un robot distant, il déplace en même temps l'ensemble du robot. Même si celui-ci est optimisé pour être le plus transparent possible, l'utilisateur ressentira les frottements et l'inertie de l'ensemble du robot. Ainsi l'espace libre ne sera pas perçu comme véritablement libre. Par ailleurs les capteurs sensoriels (tactiles et kinesthésiques) de l'utilisateur sont sollicités en permanence et sont moins sensibles aux changements de l'environnement. En particulier le passage de l'espace libre au contact sera ressenti moins franchement que dans le monde réel.

Le document Motoki Takagi, Jumpei Arata, Akihiro Sano, Hideo Fujimoto, A new desktop encounter-type haptic device with an actively driven pen-tablet LCD panel, J. Advanced Robotics, Vol. 27, No. 6, February 2013,pp. 407-415 décrit un exemple de dispositif dans lequel l'effecteur et le robot sont désolidarisés. Ce dispositif comporte une tablette graphique de type Wacom® et un stylet manipulé par l'opérateur. La tablette est montée à l'extrémité d'un robot parallèle et le stylet est repéré dans l'espace par un système optique. La tablette est alors déplacée devant le stylet en fonction des déplacements du stylet. Le retour d'effort est géré par les actionneurs du robot parallèle en fonction du niveau de pression appliqué par le stylet sur la tablette et capté par la tablette. Du fait que le stylet est séparé de la tablette, la transparence est assurée en espace libre. Cependant le retour d'effort appliqué au stylet n'a qu'une seule direction qui est la direction normale à la tablette. En outre, ce retour d'effort est unilatéral, c'est-à-dire que le stylet, respectivement la tablette, ne peut que pousser sur la tablette, respectivement sur le stylet, et pas la, respectivement le, tirer.

### EXPOSÉ DE L'INVENTION

C'est par conséquent un but de la présente invention d'offrir un dispositif de commande à retour d'effort offrant une très grande transparence voire une transparence parfaite en espace libre tout en offrant un retour d'effort amélioré.

Le but précédemment énoncé est atteint par un dispositif de commande comportant un élément manipulé par l'opérateur (encore appelé élément d'interaction) muni d'une extrémité de contact, un robot muni d'une zone de contact avec laquelle ladite extrémité de contact peut entrer en contact, ladite extrémité de contact étant mobile par rapport à la zone de contact au moins pendant une partie du fonctionnement du dispositif de commande, des moyens de mesure de la configuration relative dudit élément par rapport au robot et un contrôleur gérant le suivi sans contact, la mise en contact du robot et dudit élément et le retour d'effort une fois le robot et l'élément en contact. Le robot, la zone de contact, l'élément manipulé et l'extrémité de contact sont tels que le dispositif de commande peut assurer un retour d'effort multidirectionnel.

En d'autres termes, le dispositif de commande est un dispositif à contact intermittent faisant coopérer une extrémité de contact et une zone de contact dont les formes sont telles que la zone de contact peut appliquer des efforts sur l'extrémité de contact dans au moins deux directions distinctes.

De manière avantageuse, le retour d'effort est bilatéral dans au moins une direction. On entend par "retour d'effort bilatéral" un retour d'effort qui peut s'appliquer dans les deux sens suivant une direction donnée.

Les moyens de mesure de la configuration relative de l'élément manipulé par rapport au robot peuvent avantageusement être intégrés au corps situé à l'extrémité du robot et comportant la zone de contact. On peut encore mettre des émetteurs et capteurs sur la poignée et sur cette zone de contact. Ainsi la mesure de la position relative de la poignée par rapport au robot est connue de façon simple et précise.

Dans un autre mode de réalisation, des moyens de solidarisation provisoire peuvent être prévus entre la zone de contact et l'extrémité de contact. Le retour d'effort peut alors être multidirectionnel, bilatéral et sans jeu au contact.

Dans un autre mode de réalisation, la zone de contact est "déformable" de telle sorte que l'écart entre l'extrémité de contact et la zone de contact diminue dans plusieurs directions simultanément lorsque l'on arrive au contact. Il est ainsi possible de simuler de façon très réaliste des insertions fines avec contacts successifs sur les bords opposés du trou.

Dans un exemple de réalisation, l'élément manipulé est totalement détaché du robot portant la zone de contact. La zone de contact est par exemple formée par une cavité et l'élément a la forme d'un stylet dont une extrémité a une forme correspondante à celle de la cavité. Lorsque l'extrémité de contact du stylet entre en contact avec la cavité, des retours d'effort selon plusieurs directions peuvent être appliqués au stylet, par exemple des retours d'efforts axiaux par rapport au stylet mais également des retours d'efforts transversaux.

Dans un autre exemple de réalisation, l'extrémité de contact de l'élément manipulé est "englobée" par la zone de contact, et l'élément manipulé est séparé de la zone de contact avec un jeu dans au moins une direction donnée. Ainsi l'élément manipulé est libre de se déplacer sur une course égale à un jeu donné et lorsqu'il a parcouru ce jeu dans la direction donnée, il entre au contact de la zone de contact qui peut lui appliquer un retour d'effort. Par exemple, l'élément manipulé comporte à son extrémité de contact une sphère et la zone de contact forme un logement sphérique dont le diamètre intérieur est supérieur à celui de la sphère, la sphère étant montée dans le logement sphérique de manière inséparable en fonctionnement. Le jeu nominal est donc celui entre le rayon extérieur de la sphère et le rayon intérieur du logement, et le retour d'effort est obtenu par la mise en contact de la sphère et du logement sphérique. Ce dispositif permet un retour d'effort en translation dans toutes les directions et bilatéral dans toutes les directions.

La présente invention a alors pour objet un dispositif de commande à retour d'effort comportant:
- une poignée destinée à être manipulée par l'utilisateur, ladite poignée comportant au moins une zone de saisie par l'utilisateur et au moins une extrémité de contact solidaire de la zone de saisie au moins pendant une partie du fonctionnement du dispositif de commande,
- un robot muni d'au moins un corps terminal comportant au moins une zone de contact, ladite zone de contact pouvant entrer en contact avec l'extrémité de contact de la poignée,
- des moyens de mesure de la configuration relative de la poignée par rapport au corps terminal,
- un contrôleur apte à gérer le déplacement de la zone de contact par rapport à l'extrémité de contact dans un état de fonctionnement sans contact, dans un état de fonctionnement de mise en contact de la zone de contact et de l'extrémité de contact et dans un état de fonctionnement en contact lors duquel un retour d'effort peut être appliqué à la poignée par l'intermédiaire de l'extrémité de contact,
- l'extrémité de contact étant mobile par rapport à la zone de contact pendant au moins une partie du fonctionnement du dispositif de commande,
- dans lequel l'extrémité de contact et la zone de contact ont des formes telles que la zone de contact est apte à appliquer des efforts sur l'extrémité de contact dans au moins deux directions distinctes de sorte que le robot applique à la poignée un retour d'effort dans lesdites au moins deux directions distinctes.

Selon un exemple de réalisation, l'extrémité de contact ou la zone de contact peut former une cavité et la zone de contact ou l'extrémité de contact une forme telle qu'elle loge au moins en partie dans ladite cavité. Un jeu peut exister entre les surfaces intérieures de ladite cavité de l'extrémité de contact ou de la zone de contact et les surfaces extérieures de la zone de contact ou de l'extrémité de contact, de sorte que le déplacement relatif de l'extrémité de contact et de la zone de contact est limité dans toutes les directions.

Par exemple l'extrémité de contact a une forme sphérique et la zone de contact a une forme sphérique correspondante ou l'extrémité de contact a une forme parallélépipédique et la zone de contact a une forme parallélépipédique correspondante.

Selon un autre exemple de réalisation, la zone de contact ou l'extrémité de contact forme une cavité de laquelle l'extrémité de contact ou la zone de contact est libre de sortir. L'extrémité de contact peut présenter une paroi latérale cylindrique et une paroi d'extrémité hémisphérique et la zone de contact peut avoir une forme correspondante ou l'extrémité de contact peut présente une paroi latérale conique ou tronconique et la zone de contact peut avoir une forme correspondante.

Dans un mode de réalisation, la zone de contact et/ou l'extrémité de contact peuvent présenter une forme fixe.

Dans un autre mode de réalisation, la poignée et/ou le corps terminal comportent un élément déformable pour venir en contact avec le corps terminal et/ou la poignée respectivement lorsqu'il est déformé.

C'est avantageusement la a zone de contact et/ou l'extrémité de contact qui sont déformables.

La zone de contact et/ou l'extrémité de contact sont par exemple délimitées par plusieurs surfaces dont une au moins est mobile par rapport aux autres surfaces.

Dans un exemple de réalisation, la zone de contact et/ou l'extrémité de contact sont formées au moins en partie par une paroi souple, la mise en contact entre la zone de contact et l'extrémité de contact étant assuré au moins en partie par la déformation de la paroi souple. La paroi souple peut délimiter une chambre fermée, ledit dispositif comportant un réservoir en matériau sous forme de poudre fine et des moyens pour alimenter la chambre fermée, sur commande du contrôleur.

Les moyens de mesure peuvent comporter une caméra ou une caméra temps de vol disposée de sorte à filmer la poignée et le corps terminal, des moyens de traitement des images fournies par la caméra et avantageusement un dispositif d'éclairage. Par exemple, la poignée et/ou le corps terminal comportent au moins une cible de repérage.

Selon une caractéristique additionnelle, une ou des cibles peuvent émettre un signal permettant de les distinguer des autres cibles.

Selon une autre caractéristique additionnelle, Les moyens de mesure peuvent être disposés sur la poignée et le corps terminal, lesdits moyens de mesure comportant des éléments de repérage sur la poignée ou le corps terminal et des capteurs desdits éléments de repérage.

Les éléments de repérage sont par exemple des diodes électroluminescentes et les capteurs sont des phototransistors.

Selon une autre caractéristique additionnelle, le dispositif de commande à retour d'effort comporte des moyens de solidarisation provisoire de la poignée et du corps terminal. Avantageusement, les moyens de solidarisation provisoire sont tels que la solidarisation est supprimée lorsqu'un effort suffisant est appliqué sur l'extrémité de contact. A titre d'exemple, les moyens de solidarisation provisoire sont des moyens magnétiques ou mécaniques.

Alternativement, les moyens de solidarisation provisoire sont commandables de sorte à permettre une annulation de la solidarisation sur commande, et sont par exemple de type électromagnétique.

Avantageusement, le Dispositif de commande à retour d'effort comportant au moins un système d'alignement modifiant automatiquement la configuration relative de la poignée et du corps terminal du robot en orientation, par exemple de type magnétique.

Selon une autre caractéristique additionnelle, le dispositif de commande à retour d'effort peut comporter des moyens de détection du contact entre l'extrémité de contact et la zone de contact.

Selon une autre caractéristique additionnelle, le dispositif de commande à retour d'effort peut comporter au moins deux zones de contact et au moins deux extrémités de contact, les deux zones de contact étant mobiles l'une par rapport à l'autre et/ou les deux extrémités de contact étant mobiles l'un par rapport à l'autre.

Le robot peut être un robot série à six degrés de liberté, un robot hybride à 6 degrés de liberté, un robot parallèle à trois degrés de liberté ou un robot parallèle à deux ou trois degrés de liberté.

La présente invention également pour objet une Interface haptique comportant un dispositif de commande à retour d'effort selon l'invention et un logiciel de simulation.

La présente invention également pour objet un système robot maître et robot esclave comportant un dispositif de commande à retour d'effort selon l'invention et un robot esclave, le robot maître étant formé par le robot du dispositif de commande.

La présente invention également pour objet un robot collaboratif comportant un dispositif de commande à retour d'effort selon l'invention et un effecteur agissant sur l'environnement, monté sur le corps terminal ou sur un corps distinct.

### BRÈVE DESCRIPTION DES DESSINS

La présente invention sera mieux comprise à l'aide de la description qui va suivre et des dessins sur lesquels :
- la figure 1 est une représentation schématique d'ensemble du dispositif de commande selon l'invention,
- la figure 2 est une vue en perspective d'un premier exemple de dispositif de commande selon un premier mode de réalisation,
- les figures 3A et 3B sont des vues de détail du dispositif de la figure 2 en perspective et en coupe partielle au niveau de l'élément d'interaction suivant le premier exemple de réalisation,
- les figures 4A et 4B sont des vues de détail d'une variante du dispositif des figures 3A et 3B en perspective et en coupe partielle au niveau de l'élément d'interaction,
- les figures 5A et 5B sont des vues de détail d'un dispositif de commande selon un deuxième exemple de réalisation en perspective et en coupe partielle au niveau de l'élément d'interaction,
- les figures 6A et 6B sont des vues de détail et en coupe partielle au niveau de l'élément d'interaction d'une variante du dispositif des figures 5A et 5B,
- les figures 7A et 7B sont des vues en coupe partielle au niveau de l'élément d'interaction de deux variantes du dispositif des figures 6A et 6B,
- les figures 8A et 8B sont des vues de détail en perspective et en coupe partielle au niveau de l'élément d'interaction d'une autre variante du dispositif de commande des figures 6A et 6B,
- les figures 9A et 9B sont des vues de détail en perspective et en coupe partielle au niveau de l'élément d'interaction d'une variante du dispositif de commande des figures 8A et 8B,
- la figure 10 est une vue en coupe partielle d'une variante du dispositif des figures 8A et 8B comportant des moyens d'alignement de la poignée et du corps terminal,
- la figure 11 est une vue en perspective d'une variante de réalisation des figures 6A et 6B dans lequel la poignée comporte deux éléments articulés en rotation l'un par rapport à l'autre,
- la figure 12 est une vue en perspective d'un dispositif de commande des figures 6A et 6B comportant un système de tracking selon un premier exemple de réalisation,
- la figure 13 est une vue en perspective schématique du dispositif de commande des figures 3A et 3B comportant une variante du système de tracking de la figure 12,
- la figure 14 est une vue en perspective schématique du dispositif de commande des figures 8A et 8B comportant un deuxième exemple de système de tracking,
- la figure 15 est une vue en perspective schématique du dispositif de commande des figures 5A et 5B comportant une variante du système de tracking de la figure 14,
- la figure 16 est une vue en perspective d'un dispositif de commande selon un deuxième mode de réalisation comportant des moyens de solidarisation provisoire,
- la figure 17 est une vue en perspective d'un dispositif de commande selon le deuxième mode de réalisation comportant un autre exemple de moyens de solidarisation provisoire,
- la figure 18 est une vue en perspective d'un dispositif de commande selon le deuxième mode de réalisation comportant un autre exemple de moyens de solidarisation provisoire,
- la figure 19 est une vue en perspective d'un dispositif de commande comportant un robot hybride à 6 degrés de liberté,
- la figure 20 est une vue en perspective d'un dispositif de commande comportant un robot parallèle à 3 degrés de liberté,
- les figures 21 et 22 sont des vues en perspective et en coupe partielle d'un dispositif de commande comportant un robot parallèle à 2 degrés de liberté,
- les figures 23 et 24 sont des vues en perspective et en coupe partielle d'un premier exemple de dispositif de commande selon un troisième mode de réalisation comportant une zone de contact déformable,
- la figure 25 est une vue en perspective d'une variante du dispositif de figures 23 et 24,
- la figure 26 est une vue en coupe partielle d'un deuxième exemple d'un dispositif de commande selon le troisième mode de réalisation,
- les figures 27 et 28 sont des vues en perspective et de détail d'un dispositif de commande selon le troisième mode de réalisation comportant un robot parallèle,
- la figure 29 est un organigramme illustrant le principe de fonctionnement de l'invention.

### EXPOSÉ DÉTAILLÉ DE MODES DE RÉALISATION PARTICULIERS

Le dispositif de commande selon l'invention comporte un élément qui est manipulé directement par l'utilisateur, cet élément est généralement désigné "poignée". Cette poignée est la poignée d'un robot qui peut être un bras maître, une interface haptique ou un robot collaboratif appelé "cobot". Des capteurs situés sur ce robot permettent de mesurer les déplacements de la poignée et / ou les efforts appliqués sur celle-ci. Ces mesures sont transmises au contrôleur du robot qui va calculer les commandes en position ou en effort à appliquer sur les différents axes du robot pour suivre les mouvements de l'utilisateur et / ou appliquer un retour d'effort fonction des interactions entre le dispositif que le robot pilote et son environnement et / ou de la configuration du robot et de la poignée.

Le dispositif commandé peut-être par exemple un robot esclave dans le cas de la téléopération. En général, le bras esclave, avantageusement équipé d'un préhenseur, par exemple une pince, est piloté pour suivre les mouvements du bras maître tandis que le bras maître est piloté pour suivre ceux de l'esclave. On parle alors de couplage bilatéral en position, bien connu de l'homme de l'art et qui ne sera pas détaillé ici. D'autres modes de couplage sont également possibles, qui ne seront pas détaillés non plus. Lorsque le robot esclave est en espace libre, il suit les mouvements du bras maître. Le bras maître n'est alors mû que par les mouvements de l'utilisateur. On dit qu'il est lui-même en espace libre. Lorsque le robot esclave et en particulier son préhenseur entre en contact avec leur environnement, le robot esclave est bloqué (ou tout du moins ses mouvements sont contraints). Le robot maître, dont la position est asservie sur celle de l'esclave, est alors lui aussi bloqué (ou tout du moins ses mouvements sont aussi contraints). On dit qu'il est au contact. L'opérateur peut appliquer des efforts sur la poignée sans que celle-ci bouge librement. Ce sont ces efforts qu'il ressent. On parle de retour d'effort.

Le dispositif commandé peut encore être un avatar de la poignée de l'interface haptique en Réalité Virtuelle. Le fonctionnement est semblable à celui observé en téléopération. L'avatar est piloté pour suivre les mouvements de la poignée de l'interface haptique tandis que l'interface haptique est pilotée pour que sa poignée suive ceux de l'avatar. On peut ici aussi utiliser avantageusement un couplage bilatéral en position, ou tout autre mode de couplage. Lorsque l'avatar est en espace libre, il suit les mouvements de la poignée. On dit alors qu'elle est en espace libre. Lorsque l'avatar entre en contact avec son environnement, il est bloqué (ou tout du moins ses mouvements sont contraints). L'interface haptique, dont la position est asservie sur celle de l'avatar, a elle aussi des mouvements contraints. On dit qu'elle est au contact.

Un tel dispositif peut aussi être utilisé en tant que robot collaboratif ou cobot. Dans ce cas le robot est équipé à la fois d'une poignée permettant à l'opérateur de le manipuler et d'un effecteur, par exemple une pince portant un outil, permettant d'agir sur l'environnement. La poignée et l'effecteur peuvent être tous deux au niveau de l'organe terminal du cobot ou être disposés sur des corps distincts du cobot. Lorsque l'effecteur se déplace en espace libre et que les assistances du cobot ne sont pas activées, la position du cobot est imposée par l'opérateur. On dira par analogie avec les cas précédents qu'il est en espace libre. En revanche, si l'effecteur ou l'objet qu'il transporte entre en contact avec l'environnement, les mouvements du cobot sont contraints, donc ceux de la poignée sont également contraints. On dira par analogie avec les cas précédents qu'elle est au contact. De la même façon, si on enclenche des assistances en fonction par exemple de la position du cobot ou de l'appui sur certains boutons de commande, ces assistances, qui peuvent être par exemple des zones d'exclusion ou des guidages le long de trajectoires données, vont contraindre les mouvements de la poignée. On dira aussi que cette dernière est "au contact".

On notera que les fonctions d'assistance et de guidage peuvent également être implémentées sur les bras maîtres et les interfaces haptiques. On dit aussi que ces dispositifs sont au contact lorsque ces assistances contraignent les mouvements de leur poignée.

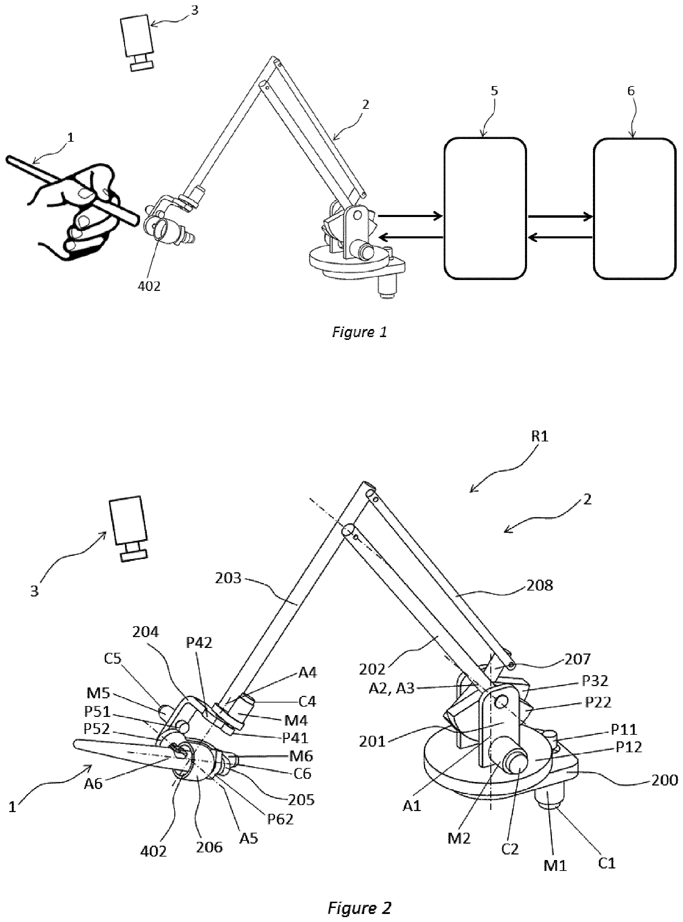

Sur la figure 1, on peut voir une représentation schématique du principe de l'invention.

Le dispositif de commande comporte une poignée 1 destinée a être manipulée par l'utilisateur, un robot 2 muni d'une zone de contact 402 destinée à venir en contact avec la poignée 1, des moyens de mesure 3 de la configuration relative de la poignée 1 et de la zone de contact 402, c'est à dire de mesure de la position et / ou de l'orientation de la poignée par rapport à la zone de contact, et des moyens de contrôle 5 intégrant les lois de commande gérant le suivi sans contact, la mise en contact du robot et de la poignée au niveau de la zone de contact et le retour d'effort une fois le robot et la poignée en contact.

Comme mentionné ci-dessus, le dispositif de commande peut être associé à une simulation en réalité virtuelle, à un robot téléopéré, ou à un dispositif de gestion des modes d'assistance en cobotique, référencé ici 6 de manière générique, et dont les informations sont utilisées par le contrôleur pour la gestion de la mise en contact du robot et de la poignée.

Dans ce document, les mêmes signes de référence seront utilisés pour désigner les éléments ayant une fonction similaire. Par ailleurs, certains éléments non visibles sur les dessins, et donc non représentés pour des raisons de clarté, sont néanmoins désignés par une référence numérique pour faciliter les explications.

Nous allons maintenant décrire un premier mode de réalisation du dispositif de commande selon l'invention.

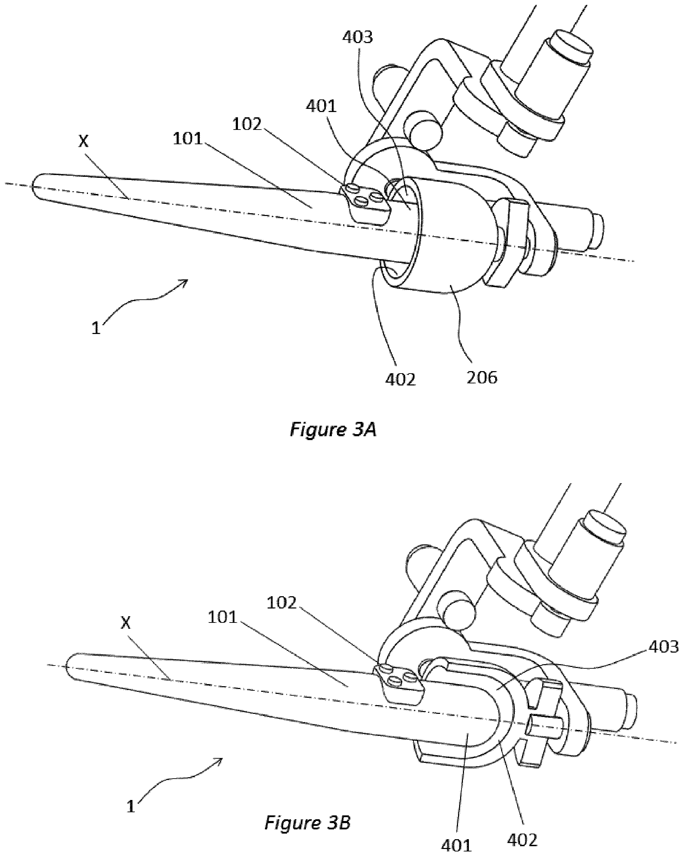

Sur la figure 2, on peut voir un premier exemple de réalisation d'un dispositif de commande selon un premier mode de réalisation, et sur les figures 3A et 3B on peut voir des vues de détail du dispositif de la figure 2.

Sur la figure 2, on peut voir représenté le dispositif de commande sans le contrôleur.

Dans l'exemple représenté, le robot 2, également désigné R1, a une structure série. Il comporte une base 200 qui peut être fixe ou mobile. Dans le cas où la base 200 est mobile, des moyens de mesure de ses déplacements sont prévus. Des corps mobiles 201, 202, 203, 204, 205 et 206 sont articulés sur la base suivant une chaine cinématique série. Le corps 201 est mobile en rotation autour d'un axe A1 par rapport à la base 200. Ses mouvements peuvent être commandés autour de l'axe A1 par l'actionneur M1 fixé sur la base 200 et équipé d'un capteur de position C1 via le réducteur formé des poulies motrice P11 et réceptrice P12 à laquelle est liée le corps 201. Le corps 202 est mobile en rotation autour d'un axe A2 par rapport au corps 201. Ses mouvements peuvent être commandés autour de l'axe A2 par l'actionneur M2 fixé sur le corps 201 et équipé d'un capteur de position C2 via le réducteur composé des poulies motrice P21 (non visible) et réceptrice P22 à laquelle est liée le corps 202. Une bielle 207 est mobile en rotation autour d'un axe A3, par rapport au corps 201. Dans l'exemple représenté, l'axe A3 est confondu avec l'axe A2. Ses mouvements peuvent être commandés autour de cet axe par un actionneur M3 (non visible) fixé sur le corps 201 et équipé d'un capteur de position C3 (non visible) via le réducteur composé des poulies motrice P31 (non visible) et réceptrice P32 à laquelle est liée un corps 207. Le corps 203 est mobile en rotation par rapport au corps 202 autour d'un axe parallèle à l'axe A2. Ses mouvements sont commandés par le moteur M3 via le mécanisme en parallélogramme formé des corps 202 et 203, de la bielle 207 et d'une biellette 208. Ce dispositif est connu de l'homme de l'art et ne sera pas détaillé. Un corps 204 est mobile en rotation par rapport au corps 203 autour d'un axe A4. Ses mouvements peuvent être commandés autour de l'axe A4 par l'actionneur M4 fixé sur le corps 203 et équipé d'un capteur de position C4 via le réducteur composé des poulies motrice P41 et réceptrice P42 à laquelle est liée le corps 204. Un corps 205 est mobile en rotation par rapport au corps 204 autour d'un axe A5 non parallèle et avantageusement concourant et perpendiculaire à l'axe A4. Ses mouvements peuvent être commandés autour de cet axe par l'actionneur M5 fixé sur le corps 204 et équipé d'un capteur de position C5 via le réducteur composé des poulies motrice P51 et réceptrice P52 à laquelle est liée le corps 205. Un corps 206 est mobile en rotation par rapport au corps 205 autour d'un axe A6 non parallèle et avantageusement concourant et perpendiculaire à l'axe A5 et concourant avec l'axe A4. Ses mouvements peuvent être commandés autour de cet axe par l'actionneur M6 fixé sur le corps 205 et équipé d'un capteur de position C6 via le réducteur composé des poulies motrice P61 (non visible) et réceptrice P62 à laquelle est liée le corps 206. La zone de contact 402 est située sur le corps 206.

La zone de contact 402 est destinée à être déplacée en fonction des déplacements de la poignée 1.

Les moteurs M1 à M6, en association avec les capteurs C1 à C6 et avec les réducteurs P11-P12 à P61-P62 permettent de commander la position du corps terminal 206 du robot où est située la zone de contact 402, notamment lorsque l'opérateur se déplace en espace libre, et de guider ou de s'opposer aux mouvements de l'utilisateur, notamment lorsque l'utilisateur met en contact la poignée 1 avec la zone de contact 402 ou déplace la poignée au contact.

Ces moteurs, capteurs et réducteurs peuvent être de tout type adapté. Les moteurs peuvent ainsi être avantageusement des moteurs électriques à courant continu à rotor sans fer ou des moteurs brushless, mais aussi et de manière non limitative des moteurs à courant continu classiques, des alliages à mémoire de forme, des actionneurs piézoélectriques, des actionneurs pneumatiques ou hydrauliques.

Alternativement, sur un ou plusieurs axes, des freins pourront être utilisés à la place de tout ou partie des moteurs, ces freins pouvant être notamment et de manière non exhaustive des freins à disques, des freins à poudre ou des freins à fluides magnétorhéologiques ou électrorhéologiques. Dans le cas où sur un ou plusieurs axes des freins sont mis en oeuvre, le dispositif ne pourra que s'opposer aux mouvements de l'utilisateur et ne pourra pas agir sur lui de manière active.

En variante encore, des actionneurs hybrides associant un moteur et un frein de tous types présentés précédemment ou autres pourront être utilisés.

On pourra en variante également utiliser sur un ou plusieurs axes des dispositifs d'actionnement antagonistes et/ou des dispositifs à raideur variable de type "series elastic actuators" ou "parallel elastic actuators".

Les réducteurs, représentés ici de manière schématique, pourront avantageusement être des cabestans à câbles mais ils pourraient aussi être de manière non exhaustive des réducteurs à engrenages simples ou épicycloïdaux, à un ou plusieurs étages, des réducteurs de type "Harmonie Drive" ou des réducteurs à vis à billes. En variante, des réducteurs non réversibles comme des réducteurs à roue et vis sans fin pourraient être utilisés. Dans tous les cas et plus particulièrement dans le cas de l'utilisation de moteurs et / ou de réducteurs à faible rendement et / ou présentant des frottements importants ou peu ou pas réversibles, on pourrait avantageusement utiliser au niveau des moteurs, au niveau des articulations du robot ou au niveau de sa base ou de son extrémité des capteurs d'efforts dont les signaux seraient utilisés pour compenser ces défauts et rendre le robot réversible et / ou plus transparent.

Les capteurs peuvent être de tout type adapté, en particulier et de manière non exhaustive des codeurs optiques, des capteurs à effet Hall, des potentiomètres ou des codeurs magnéto-optiques. Ces capteurs peuvent être absolus (multi-tours) ou relatifs.

En particulier, sur la figure 2, les capteurs sont représentés sur les moteurs. Tout ou partie d'entre eux pourrait également être placé sur les articulations du robot. On pourrait encore avoir sur un ou plusieurs axes des capteurs à la fois sur les moteurs et sur les articulations.

Il sera noté que sur la figure 2 et les autres figures décrites, les liaisons cinématiques sont représentées de façon schématique. Celles-ci pourraient être avantageusement réalisées au moyen de roulements à billes, de pallier lisses, de paliers magnétiques ou de toute autre solution connue de l'homme de l'art. De la même façon les liaisons sont représentées de façon simplifiée en porte à faux. Il pourrait être avantageux de réaliser des liaisons en chape, c'est-à-dire avec une reprise des efforts de chaque côté de la liaison sans sortir du cadre de l'invention, en particulier pour le guidage en rotation des poulies des réducteurs dont les efforts pourraient avantageusement être repris par des paliers ou des roulements du côté des poulies opposé aux moteurs. Ces éléments sont connus de l'homme de l'art et ne sont donc ni représentés ni expliqués. Les réducteurs sont également représentés de façon schématique. Les dents des engrenages ou les câbles de cabestans ne sont pas représentés à des fins de clarté des figures. Dans le cas de l'utilisation de cabestans, il serait également avantageux d'usiner un profil en hélice sur les poulies et de prévoir des systèmes de guidage et de tension des câbles. Ces éléments sont connus et ne seront pas détaillés ici. Par ailleurs, sur les figures, les différents corps des robots et les poignées sont représentés de manière monobloc. Il est bien entendu que cette représentation n'est que schématique. Elle est destinée à faciliter la lecture des figures. Dans la pratique, ces pièces seraient de préférence formées de plusieurs éléments assemblés entre eux.

Sur les figures 3A et 3B, on peut voir en détail la poignée et la zone de contact 402 selon un premier exemple de réalisation du premier mode de réalisation.

La poignée comporte un manche de saisie 101 destiné à être pris en main par l'utilisateur et une zone destinée à venir en contact avec la zone de contact 402 portée par le corps terminal 206 du robot 2.

Dans l'exemple représenté, la poignée a la forme d'un stylet d'axe longitudinal X et dont l'extrémité longitudinale 401, désignée "extrémité de contact 401" est destinée à entrer en contact avec la zone de contact 402.

La zone de contact 402 selon l'invention est formée par la surface intérieure d'une cavité 403 dans laquelle est destinée à pénétrer l'extrémité de contact 401.

Dans le premier exemple de réalisation, la poignée 1 est entièrement indépendante du robot, elle peut être écartée de la zone de contact 402 de la distance souhaitée par l'utilisateur dans la direction de l'axe X.

L'extrémité de contact 401 et la zone de contact 402 ont avantageusement des formes similaires à un facteur d'échelle près. Dans l'exemple représenté, l'extrémité de contact présente une portion de cylindre terminée par un hémisphère et l'intérieur de la cavité est délimitée par une portion de cylindre fermée à une extrémité par un hémisphère.

Ainsi le dispositif aura un comportement homogène dans toutes les directions puisque dans une configuration nominale la distance à parcourir avant le contact est la même dans toutes les directions. La distance séparant les zones 401 et 402 est choisie avantageusement pour être suffisamment grande pour que le robot ne soit jamais en contact avec la poignée en espace libre, et ce quels que soient les mouvements de l'utilisateur, et suffisamment petite pour que le contact ait lieu rapidement lorsqu'il est souhaité. Il sera compris que l'absence de contact quels que soient les mouvements de l'utilisateur est à considérer relativement à une plage de mouvements donnée en fonction de l'utilisation.

Par exemple, lors de la simulation ou du pilotage de l'insertion d'une pièce dans une autre, il apparaît souvent des contacts successifs de chaque côté de la pièce que l'on insère. Grâce à l'invention, en choisissant une distance suffisamment petite, on assure que la zone de contact 402 puisse venir rapidement d'un côté à l'autre de l'extrémité 401, et ces efforts d'insertion sont restitués efficacement.

Dans l'exemple représenté, la poignée 1 est également équipée de boutons 102, par exemple au nombre de trois et servant par exemple à lancer des modes particuliers de fonctionnement, tels que par exemple la saisie d'un objet, le décalage ou l'activation d'un guide virtuel.

La poignée pourrait encore être équipée d'un dispositif de type homme mort. Pour mesurer l'état des boutons et de l'homme mort, la poignée pourrait être reliée au contrôleur du robot par des fils. Elle pourrait encore être équipée d'un circuit électronique spécifique disposant d'un système de transmission sans fil, par exemple de type Wifi ou Bluetooth, et de batteries ou de piles, pour renvoyer ces informations au contrôleur. Ces éléments sont connus de l'homme de l'art et ne seront pas présentés en détail ici.

Les moyens de mesure 3 permettant de connaître à tout instant la position relative de la poignée 1 par rapport au corps terminal 206, et donc la position relative de l'extrémité de contact 401 par rapport à la zone de contact 402, seront décrits par la suite.

La connaissance de cette position relative permet de piloter le dispositif grâce au contrôleur de sorte que le robot reste à distance de la poignée en espace libre afin d'éviter le contact ou au contraire entre à son contact au moment et aux endroits désirés de l'extrémité de contact 401 et de la zone de contact 402, ou enfin qu'ils restent en contact.

La poignée du dispositif des figures 3A et 3B étant de révolution, le moteur M6 et le capteur C6 pourraient être omis.

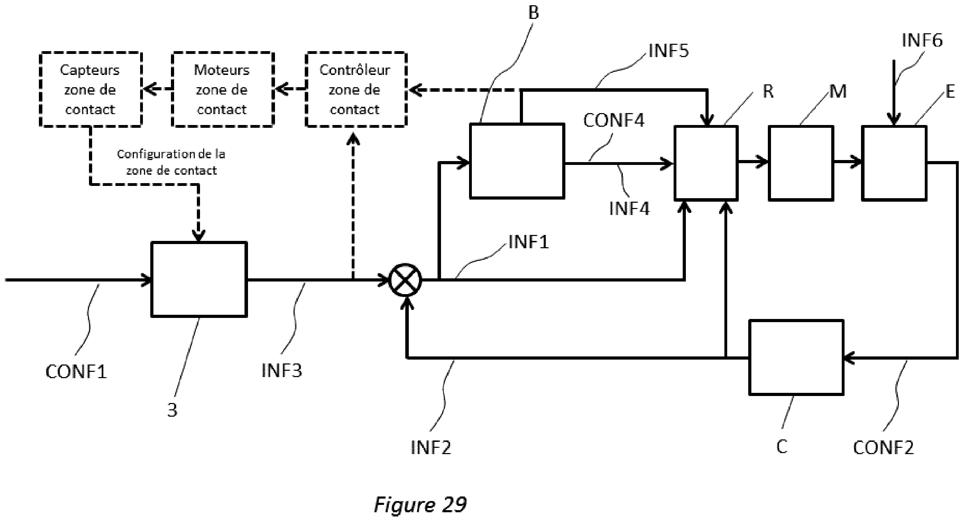

Le principe de fonctionnement du système intégrant le dispositif de commande des figures 3A et 3B va maintenant être décrit à l'aide de l'organigramme de la figure 29.

L'utilisateur saisit la poignée 1. Les capteurs C du robot permettent de connaître à tout instant la configuration absolue du corps terminal 206 dans l'espace, désignée CONF2. Cette information est désignée INF2. Les moyens de mesure 3 mesurent la configuration réelle de la poignée, désignée CONF1, et permettent de connaître la configuration absolue de la poignée dans l'espace et la configuration relative de la poignée par rapport au robot. Ces informations sont désignées respectivement INF1 et INF3. Sur l'exemple représenté sur la figure 29, les moyens de mesure 3 permettent de mesurer la configuration relative de la poignée par rapport au robot, ce qui est le cas notamment lorsque l'on utilise des moyens de mesure dits "internes" et qui seront décrits par la suite. La configuration absolue de la poignée est alors obtenue en combinant cette information avec l'information de position absolue de l'extrémité du robot. Il est bien entendu que les moyens de mesure 3 pourraient également, sans sortir du cadre de l'invention, permettre de mesurer la configuration absolue de la poignée dans l'espace, ce qui est le cas notamment lorsque l'on utilise des moyens de mesure dits "externes" et qui seront décrits par la suite. La configuration relative de la poignée par rapport au robot est dans ce cas obtenue en combinant cette information avec l'information de position absolue de l'extrémité du robot.

Ces informations sont transmises au robot esclave B ou au logiciel de simulation B dans le cas d'une interface haptique ou au dispositif de gestion des assistances B dans le cas d'un cobot. Par ailleurs, le logiciel de simulation ou les capteurs du robot esclave ou du cobot permettent de connaître à chaque instant la configuration absolue de l'avatar ou du robot esclave ou de l'effecteur du cobot, cette information est désignée INF4, et sa distance aux objets réels ou virtuels environnants, cette information est désignée INF5. Ces informations sont envoyées à un correcteur R faisant partie du contrôleur du robot qui les combine et les traite pour commander les moteurs M du robot qui permettent, en fonction du modèle E du robot, de commander la configuration réelle CONF2 du corps terminal 206, et le logiciel de simulation ou les moteurs du robot esclave ou du cobot permettent de modifier la configuration, désignée CONF4, de l'avatar ou du robot esclave ou de l'effecteur du cobot respectivement.

Le dispositif peut présenter trois états de fonctionnement :
- Un état de fonctionnement en espace libre : lorsque l'avatar ou le robot esclave ou le cobot sont à distance de leur environnement et que leur mouvement n'est pas contraint par des assistances, le système est dit en espace libre. La configuration du dispositif commandé est alors asservie sur celle de la poignée 1 et celle du robot 2 sur celle du dispositif commandé. Ainsi le robot 2 suit les mouvements de la poignée imposés par l'utilisateur, à la dynamique près de ces systèmes. L'extrémité de contact 401 et la zone de contact 402 restent à distance l'une de l'autre.
- La transition espace libre-contact : lorsque l'avatar ou le robot esclave ou le cobot entrent en contact avec leur environnement et / ou que des assistances contraignant leurs mouvements sont activées, leur mouvement est restreint ou bloqué. Le robot 2, qui est alors toujours asservi pour suivre les mouvements du dispositif commandé, va donc lui aussi voir son mouvement restreint ou être bloqué. La poignée 1 toujours manipulée par l'utilisateur et qui est, quant à elle, libre, va alors se rapprocher du robot et l'extrémité de contact 401 et la zone de contact 402 vont entrer en contact. Cette transition est d'autant plus rapide et donc le contact d'autant plus réaliste pour des tâches comme les insertions requérant des contacts successifs rapides que la distance entre les surfaces 401 et 402 est faible. La distance est cependant suffisante pour qu'elles n'entrent pas en contact en espace libre. On notera que puisque le dispositif commandé est bloqué au contact de son environnement, le déplacement de la poignée jusqu'à venir au contact du robot peut être vue comme une pénétration dans l'environnement ou un dépassement de la poignée par rapport à l'avatar ou au robot esclave ou au cobot. Ce dépassement est d'autant plus faible que la distance entre l'extrémité de contact 401 et la zone de contact 402 est faible.

- Le fonctionnement au contact : une fois la poignée en contact avec le corps terminal du robot, celui-ci peut être commandé en position ou en effort. Dans le cas d'une commande en position, sa configuration est asservie sur celle de l'esclave. Celui-ci étant bloqué, le robot 2 l'est aussi, ainsi que la poignée puisque celle-ci est en contact avec le robot. Dans le cas d'une commande en effort, le robot est directement asservi pour appliquer sur la poignée les mêmes efforts que ceux appliqués sur l'avatar et fournis par le logiciel de simulation ou sur le robot, mesurés par ses capteurs et fournis par le contrôleur esclave. Dans les deux cas l'utilisateur ressent un retour d'effort au contact.

Le second état (transition espace libre-contact) est également celui dans lequel se trouve le système lors des transitions contact-espace libre : lorsque l'utilisateur déplace la poignée de sorte à déplacer l'avatar ou le robot esclave dans une direction opposée à leur environnement, l'avatar ou le robot esclave va tout d'abord rester au contact de son environnement tant que le dépassement de la poignée par rapport à lui n'est pas revenu à zéro puisque l'avatar ou l'esclave est toujours asservi en position sur la poignée qui est vue par lui comme située à l'intérieur de l'environnement. Ensuite, l'avatar ou l'esclave va suivre les mouvements de la poignée et ne sera plus au contact de son environnement. Le système se retrouve alors en espace libre. Pour que le décalage temporel entre le déplacement de la poignée et celui du robot soit faible, une faible distance entre les surfaces 401 et 402 est requise.

Dans l'exemple représenté sur la figure 29, le correcteur R utilise les informations INF1, INF2, INF4 et INF5. Il pourrait également utiliser d'autres combinaisons des informations INF1 à INF5 sans sortir du cadre de l'invention. Tout autre type de commande du robot et / ou du dispositif commandé pourrait aussi être utilisé, sous réserve de permettre la gestion de ces trois états de fonctionnement. Il serait par exemple possible d'introduire des facteurs d'amplification en position et / ou en effort entre la poignée et le dispositif commandé. On pourrait également utiliser une commande en vitesse, notamment en espace libre, ou une commande commutant entre commande en position et en vitesse en fonction des déplacements de la poignée. On pourrait encore contraindre certains mouvements, par exemple à l'aide de guides virtuels. Tous ces éléments sont connus et ne seront pas détaillés.

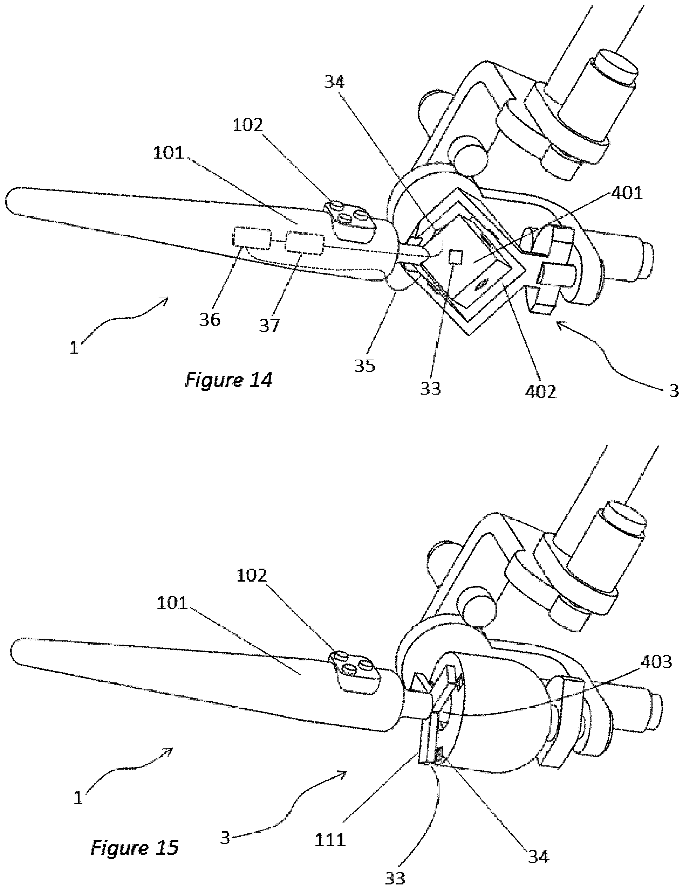

Le robot peut être commandé en position en espace libre et au contact. Il peut également être commandé en position ou en vitesse en espace libre et en effort au contact. Dans ce cas une commutation sera faite entre la commande en position en espace libre et lors des transitions et la commande en effort au contact. Ces modes de commande étant très différents, il peut apparaître des instabilités si la commutation n'a pas lieu exactement lorsque les surfaces 401 et 402 entrent en contact du fait d'erreurs ou d'imprécision dans la mesure de la configuration relative de la position de la poignée et du corps terminal du robot. Un dispositif de détection de contact peut alors être avantageusement utilisé entre la poignée et le robot, cette information permettant de déclencher la transition même si l'écart mesuré sur leurs configurations n'est pas nul, afin d'éviter l'apparition d'instabilités au passage d'un mode de commande à l'autre. Un tel dispositif de détection de contact sera décrit plus en détail par la suite en relation avec la figure 14.

Grâce à l'invention, le retour d'effort appliqué par le robot à la poignée est multidirectionnel du fait de la forme enveloppante de la zone de contact. La zone de contact peut appliquer un effort s'opposant au déplacement de la poignée dans plusieurs directions.

Cet exemple de réalisation permet en outre des retours d'efforts bilatéraux selon des directions sensiblement transversales par rapport à l'axe X de la poignée.

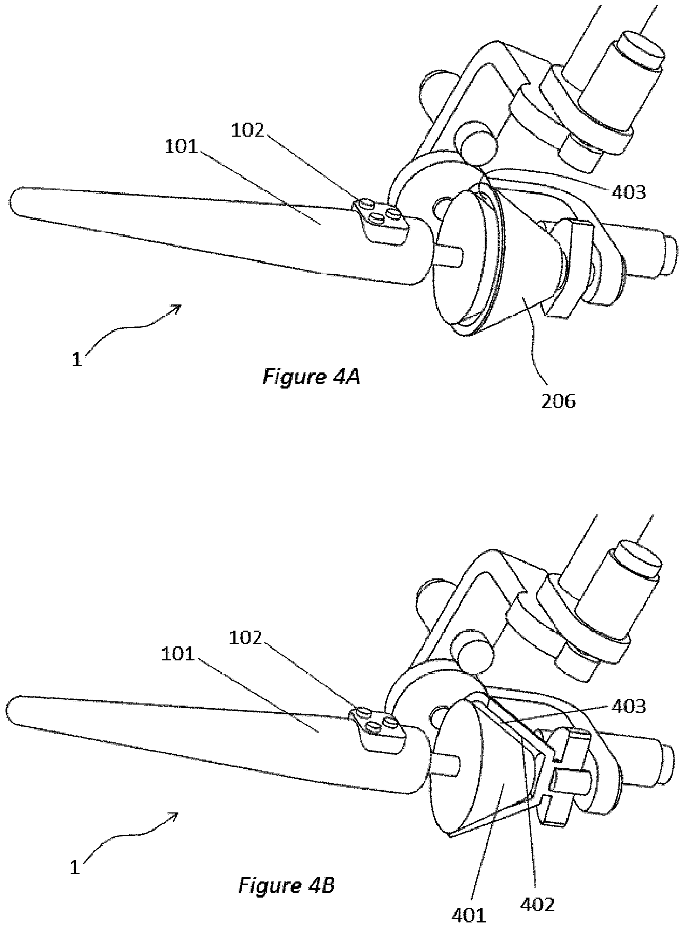

Sur les figures 4A et 4B, on peut voir une variante du dispositif de commande du premier exemple de réalisation dans lequel c'est la forme de l'extrémité de contact et celle de la zone de contact qui diffèrent. Dans cette variante, l'extrémité de contact 401 présente une forme tronconique et la cavité 403 présente une forme tronconique correspondante de mêmes dimensions. Ainsi et contrairement au cas illustré par les figures 3A et 3B, la poignée et le corps d'extrémité 206 sont en contact sur tout le pourtour de l'extrémité de contact 401 et de la zone de contact 402 après leur mise en contact. Dans ce cas leur distance relative est nulle, ce qui permet de simuler encore plus aisément des insertions.

Ce premier exemple de réalisation dans lequel la poignée est partiellement libre de se déplacer relativement au corps terminal présente l'avantage de permettre de changer très facilement d'outil. Il suffit de sortir la poignée utilisée par exemple après avoir appuyé sur l'un des boutons pour indiquer au contrôleur que l'outil va être changé, puis de saisir un autre outil et de mettre l'extrémité de contact 401 de ce nouvel outil en regard ou au contact de la zone de contact 402, et enfin d'indiquer au système que l'on est prêt à utiliser le nouvel outil, par exemple en appuyant sur un bouton de commande.

Les différents outils seront avantageusement équipés de moyens de reconnaissance, tels que par exemple et de manière non exhaustive un code barre, un flashcode, un code à bulles, un tag RFID actif ou passif, un code couleur local, ou tout autre moyen de reconnaissance, et le robot sera avantageusement équipé d'un dispositif de lecture de ces éléments. Ces dispositifs et leurs moyens de lecture sont connus de l'homme de l'art et ne sont pas détaillés ici. L'information sur le type de poignée utilisée est désignée INF6 sur la figure 29. Elle peut être utilisée pour mettre à jour automatiquement les modèles du robot, par exemple pour tenir compte de poignées de formes et / ou de longueurs différentes, et assurer que le retour d'effort soit toujours correct dans la main de l'utilisateur quelle que soit la poignée utilisée.

Il sera bien compris que ce pourrait également être uniquement la zone de saisie 101 ou la zone de saisie 101 et les boutons 102 qui sont interchangeables. Dans ce cas ces éléments seraient avantageusement séparables de l'extrémité 401 et pourvus des moyens de reconnaissance présentés précédemment. Bien entendu il serait également possible de changer la zone de saisie 101 ou toute la poignée 1 avec les autres exemples ou variantes ou modes de réalisation.

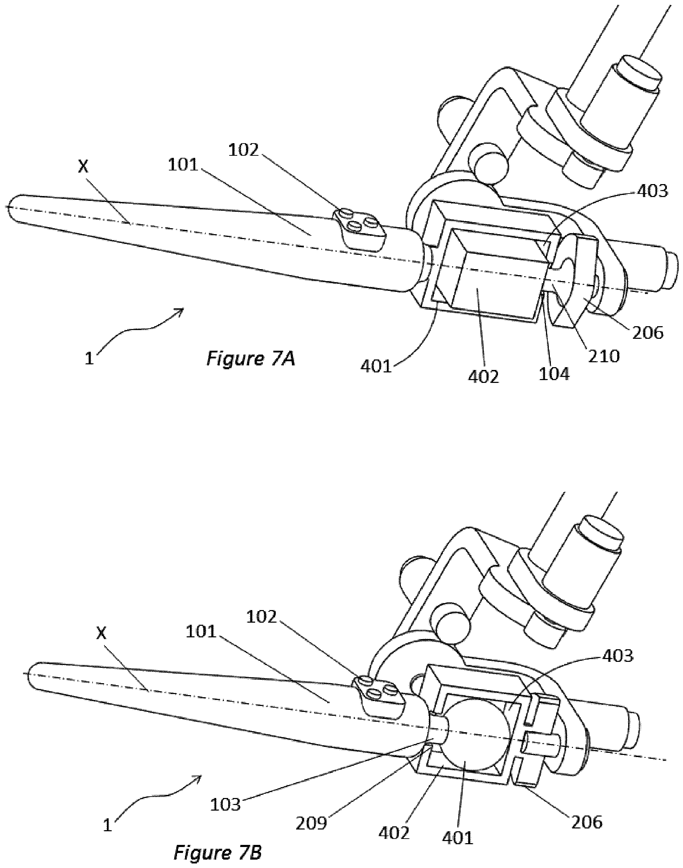

Il est bien compris également que ce pourrait également être l'extrémité de contact 401 qui forme une cavité dans laquelle vient s'insérer la zone de contact 402 comme cela est illustré sur la figure 7A.

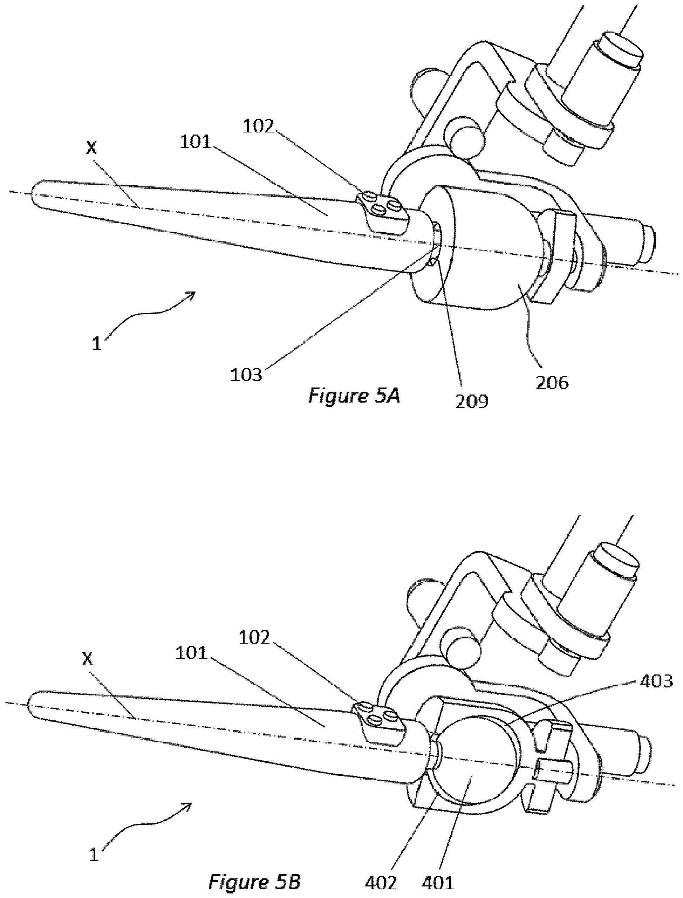

Sur les figures 5A et 5B, on peut voir un deuxième exemple de réalisation d'un dispositif de commande selon le premier mode de réalisation de l'invention. Cet exemple diffère du premier exemple en ce que le déplacement relatif entre la poignée et le corps terminal est limité dans toutes les directions (à l'exception de la rotation autour de l'axe X sur l'exemple des figures 5A et 5B).

La poignée des figures 5A et 5B présente toujours une forme de stylet et comporte une extrémité de contact de forme sphérique 401 reçue dans une cavité de forme sphérique correspondante. La zone de contact 402 est donc également sphérique. Le diamètre extérieur de la sphère 401 et le diamètre intérieur de la sphère 402 sont choisis de sorte à permettre un déplacement relatif entre la poignée et le corps terminal afin de permettre un fonctionnement transparent en espace libre.

Plus particulièrement, la poignée comporte un manche de saisie 101 et une extrémité de contact sphérique 401 reliée au manche par une zone amincie 103. La cavité 403 comporte une ouverture 209 de diamètre suffisamment grand pour le passage de la zone amincie 103 et suffisamment petit pour empêcher l'extrémité de contact 401 de s'échapper de la cavité 403 de sorte à former des moyens de retenue pour l'extrémité de contact 401.

Le diamètre de l'extrémité sphérique 401 par rapport au diamètre de la cavité 403 est choisi suivant le fonctionnement souhaité en espace libre. Plus on souhaite une possibilité de déplacement relatif entre l'extrémité de contact 401 et la zone de contact 402 importante, plus la différence de diamètre sera grande et inversement, si on souhaite une possibilité de déplacement relatif entre l'extrémité de contact 401 et la zone de contact 402 faible, la différence de diamètre sera faible.

Comme pour le dispositif des figures 3A et 3B, la poignée étant de révolution, le moteur M6 et le capteur C6 peuvent être omis.

Le fonctionnement du deuxième exemple de réalisation des figures 5A et 5B est similaire à celui du dispositif de commande des figures 3A et 3B. Il permet un retour d'effort multidirectionnel. En outre, il permet, de manière très avantageuse par rapport au premier exemple de réalisation, un retour d'effort bilatéral dans toutes les directions en translation puisque l'extrémité de contact de la poignée ne peut s'échapper de la cavité 403. Le robot est alors apte à appliquer un retour d'effort le long de l'axe X dans les deux sens, ce que ne permettent pas les dispositifs des figures 3A et 3B et 4A et 4B.

Ce robot pourra être utilisé pour appliquer des efforts uniquement en translation. Dans ce cas les moteurs M4 à M6 seront utilisés pour orienter le corps 206 suivant la même orientation que le stylet 1. Il pourra également être utilisé pour appliquer des efforts en translation et suivant jusqu'à deux degrés de liberté en rotation (compte tenu de sa géométrie, ce robot ne peut pas appliquer d'efforts en rotation autour de l'axe X). Dans ce cas les moteurs M4 à M6 seront utilisés pour appliquer des couples sur le stylet 1 par l'intermédiaire des efforts de contact d'une part entre l'extrémité 401 et la zone 402 et d'autre part entre la zone amincie 103 et l'ouverture 209.

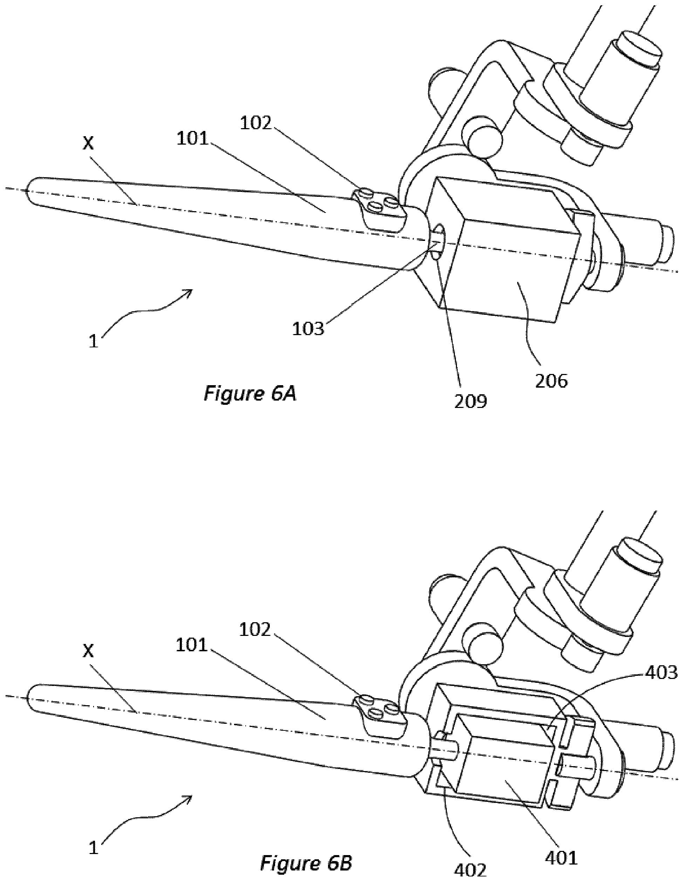

Sur les figures 6A et 6B, on peut voir une variante de réalisation du deuxième exemple de réalisation dans lequel l'extrémité de contact 401 présente une forme de parallélépipède rectangle reçu dans une cavité ayant une forme correspondante.

Le manche 101 de la poignée est raccordée par une portion amincie 103 à une face de l'extrémité de contact.

Le fonctionnement est similaire à celui des dispositifs des figures 3A à 5B. Il présente l'avantage d'offrir un retour d'effort bilatéral dans toutes les directions à la fois en translation et en rotation. Il permet par rapport au dispositif des figures 5A et 5B, une fois l'extrémité de contact et la zone de contact en contact, d'appliquer un effort sur la main de l'utilisateur ou de résister à un effort de l'opérateur dans toutes les directions, à la fois en translation et en rotation. Le contact peut avoir lieu sur les faces, mais il peut aussi avoir lieu sur une combinaison d'arêtes ou de coins.

Comme précédemment, ce robot pourra être utilisé pour appliquer des efforts uniquement en translation. Dans ce cas les moteurs M4 à M6 seront utilisés pour orienter le corps 206 suivant la même orientation que le stylet 1. Il pourra également être utilisé pour appliquer des efforts en translation et suivant jusqu'à trois degrés de liberté en rotation. Dans ce cas les moteurs M4 à M6 seront utilisés pour appliquer des couples sur le stylet 1 par l'intermédiaire des efforts de contact entre l'extrémité 401 et la zone 402.

Sur la figure 7A, on peut voir une variante du dispositif des figures 6A et 6B, dans lequel c'est l'extrémité de contact 401 qui englobe la zone de contact 402. Le corps d'extrémité 206 comporte une zone amincie 210 reliant sa partie amont à la zone de contact 402 et la cavité 403 comporte une ouverture 104 ménagée dans la poignée 1 de diamètre suffisamment grand pour le passage de la zone amincie 210 et suffisamment petit pour empêcher la zone de contact 402 de s'échapper de la cavité 403. Le fonctionnement du dispositif de la figure 7A est similaire à celui du dispositif des figures 6A et 6B.

Sur la figure 7B, on peut voir une autre variante du second exemple de réalisation d'un dispositif de commande selon le premier mode de réalisation de l'invention combinant certains éléments du dispositif des figures 5A et 5B et d'autres éléments du dispositif des figures 6A et 6B, et dans lequel l'extrémité de contact 401 a une forme sphérique et la cavité 403 et la zone de contact 402 ont une forme de parallélépipède rectangle, avantageusement cubique pour que le comportement du système soit le même dans toutes les directions. Ainsi, le contact de la sphère sur chaque face du cube sera ponctuel et plus facile à gérer que sur le dispositif des figures 6A et 6B.

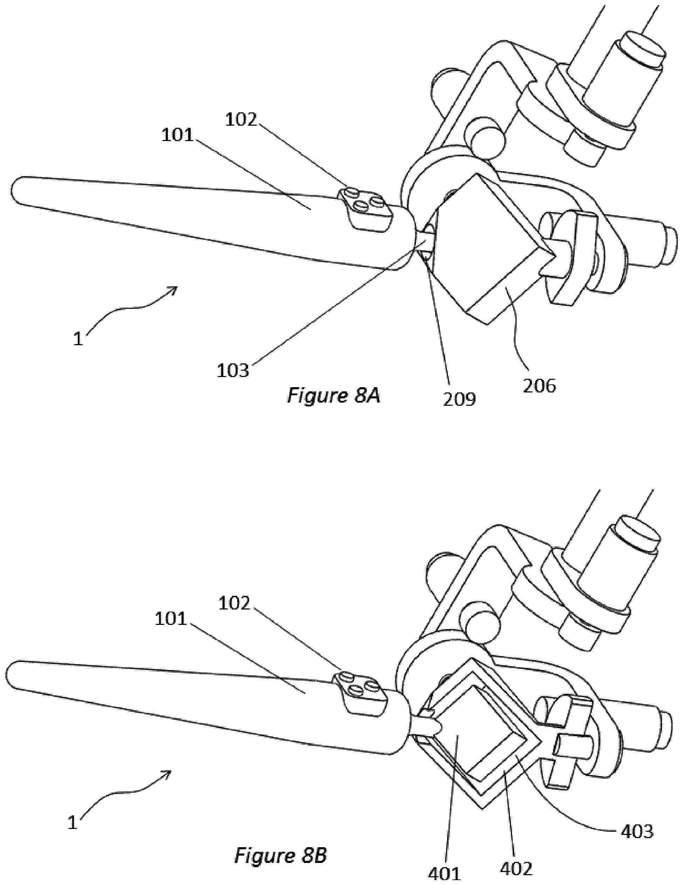

Sur les figures 8A et 8B, on peut voir une autre alternative au dispositif des figures 6A et 6B, dans lequel l'extrémité de contact 401 est de forme cubique, la cavité 403 présente une forme cubique correspondante et le manche se raccorde à l'extrémité de contact par la portion amincie 103 au niveau d'un coin du cube.

Le fonctionnement de ce dispositif est similaire à celui du dispositif des figures 6A et 6B.

Il sera compris que les formes illustrées sur les figures 3A à 8B sont données à titre d'exemples non limitatifs et sont représentées de manière stylisée. Toute autre forme des zones de contact entre dans le cadre de l'invention, sous réserve que le contact puisse être bilatéral dans au moins une direction de l'espace (en translation et / ou en rotation). Dans les exemples décrits sur les figures 3A à 7A et 8A et 8B, l'extrémité de contact et la zone de contact ont des formes correspondantes. Il est aussi possible que l'extrémité de contact et la zone de contact ne soient pas de formes correspondantes, comme dans l'exemple de la figure 7B.

En outre, il sera compris que l'extrémité de contact et la zone de contact peuvent avoir des tailles différentes ou la même taille, comme par exemple dans la variante des figures 4A et 4B.

On pourrait aussi prévoir des extrémité et zone de contact de taille identique sur une partie de leur surface et fonctionnant dans certaines directions comme la variante des figures 4A et 4B et des extrémités et zone de contact des tailles différentes dans d'autres parties de leur surface et fonctionnant dans d'autres directions comme les autres variantes du dispositif.

Avantageusement et comme cela est le cas pour les dispositifs des figures 3A à 8B, l'extrémité de contact et la zone de contact occupent une zone qui se trouve approximativement autour de l'intersection des axes A4, A5 et A6. Cette disposition présente l'avantage de pouvoir découpler facilement les efforts générés en translation et en rotation au niveau de l'extrémité de contact et de la zone de contact. Il est à noter en revanche que, pour pouvoir appliquer par exemple une force pure sur la zone de saisie 101, il faut appliquer sur l'extrémité de contact et la zone de contact à la fois une force et un moment.

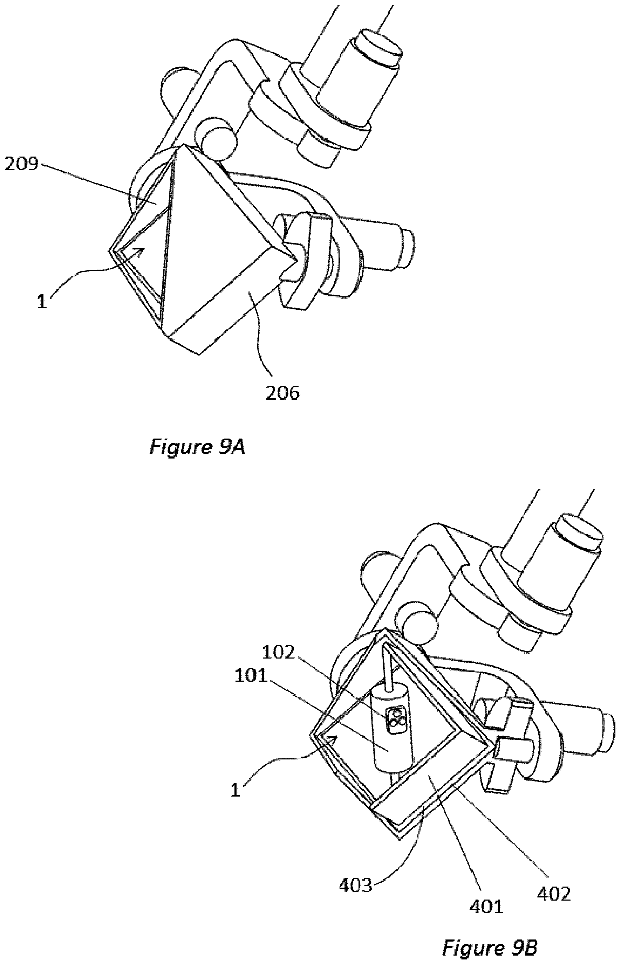

Sur les figures 9A et 9B, on peut voir encore une variante de réalisation du deuxième exemple de réalisation. Le dispositif des figures 9A et 9B diffère de ceux déjà décrits en ce que la poignée est telle qu'elle se situe entièrement à l'intérieur de la cavité 403. Dans la représentation des figures 9A et 9B, le corps terminal 206 est représenté comme un élément monobloc, mais il sera compris que le corps terminal pourrait en pratique être usiné en plusieurs pièces assemblées autour de l'extrémité de contact de la poignée.

Dans cette variante, le manche ou la zone de saisie de la poignée 1 est disposé de telle sorte que son centre se trouve à proximité de l'intersection des axes A4, A5 et A6. Ainsi le retour d'effort en translation et en rotation sur la main est découplé.

Dans l'exemple représenté l'extrémité de contact est cubique et est reçue dans une cavité cubique. Le manche s'étend entre deux sommets du cube. Ainsi l'extrémité de contact et la cavité comportent une ouverture suffisante pour y introduire un ou plusieurs doigts, une main ou les deux mains et manipuler la poignée. Comme dans les dispositifs décrits ci-dessus, le manche 101 peut comporter des boutons de commande 102.

Il sera compris que cette disposition du manche de la poignée à l'intérieur du volume défini par la zone de contact peut s'appliquer à toutes les variantes des premier et deuxième modes de réalisation. Par exemple, la zone de contact et l'extrémité de contact pourrait être sphériques ou alors tronconiques.

Dans les exemples de dispositifs décrits ci-dessus et qui comportent un robot tel que celui de la figure 2, les axes A1 à A6 sont motorisés. Dans ces conditions, il est possible d'appliquer un effort sur la poignée donc sur la main de l'utilisateur ou de s'opposer à ses mouvements dans certaines directions ou toutes les directions suivant les cas, en translation et en rotation. On a donc dans ce cas un dispositif ayant jusqu'à 6 degrés de liberté à retour d'effort. Il serait également possible de ne pas motoriser les axes A4 à A6. Dans ce cas le dispositif présenterait 3 degrés de liberté à retour d'effort en translation, les rotations étant libres. Le corps terminal du robot peut alors simplement suivre les mouvements en rotation de la poignée par entraînement par celle-ci lorsque la poignée est en contact avec le corps 206. Cependant, en cas de changement de direction en rotation, l'utilisateur ressent alors les contacts successifs de la surface 401 de chaque côté de la surface 402, ce qui peut nuire à l'impression de se déplacer en espace libre. Afin d'améliorer encore l'impression de déplacement en espace libre, un système à 6 degrés de liberté peut être mis en oeuvre et dans lequel les moteurs M4 à M6 sont utilisés pour commander le corps terminal 206 de sorte que son orientation suive celle de la poignée. On peut alors motoriser les axes A4, A5 et A6 avec des moteurs pas-à-pas de sorte que le corps 206 suive les mouvements de la poignée. Ces moteurs présentent les avantages d'être en général plus légers, plus compacts et plus faciles à commander que les moteurs commandés en couple.

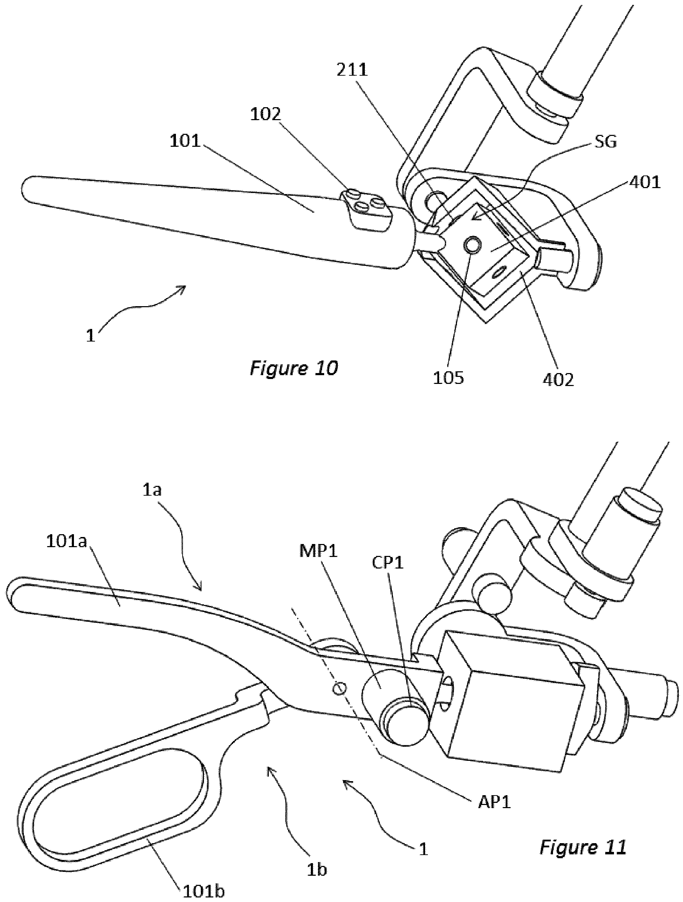

En variante et comme cela est représenté sur la figure 10, des systèmes passifs peuvent être prévus pour aligner automatiquement la poignée et le corps terminal du robot en orientation.

Dans l'exemple représenté, le système de guidage SG comporte un ou plusieurs aimants 105 sur l'extrémité de contact 401, dont un pôle, par exemple le pôle nord, est situé en regard de la zone de contact 402 et un ou plusieurs aimants 211 sur la zone de contact 402, dont le pôle opposé à celui du pôle des aimants 105 de la zone de contact en regard, ici par exemple le pôle sud, est situé en regard de l'extrémité de contact 401. Ainsi les pôles des aimants 105, 211 vont s'attirer et aligner automatiquement l'extrémité de contact 401 et la zone de contact 402, et donc vont aligner la poignée et le corps terminal du robot.

Les aimants 105, 211 sont avantageusement placés dans des logements usinés en creux dans les pièces 1 et 206 de sorte qu'ils ne dépassent pas des surfaces des zones de contact 401 et 402 et qu'ils ne gênent pas la mise en contact de ces zones.

En variante, les aimants 105, 211 pourraient être situés sur la poignée 1 et sur le corps 206 en dehors de l'extrémité de contact 401 et de la zone de contact 402. Par exemple la cavité peut comporter sur le bord de son ouverture des aimants et la poignée pourrait comporter un élément s'étendant radialement faisant face au bord de l'ouverture de la cavité et portant des aimants.

Les aimants du corps terminal et/ou de la poignée pourraient être remplacés par des électroaimants, ce qui permettrait de piloter l'alignement, par exemple en fonction de la distance entre l'extrémité de contact 401 et la zone de contact 402. Par ailleurs, bien que les axes A4, A5 et A6 ne soient pas motorisés dans ce cas, ils pourraient être équipés de capteurs de position pour connaître l'orientation du corps terminal.

Ce mode de réalisation d'un système d'auto-alignement est donné à titre indicatif et n'est pas limitatif. Il serait ainsi possible d'utiliser un nombre d'aimants ou d'électroaimants différents sur l'extrémité de contact 401 et sur la zone de contact 402. Ces aimants ou électroaimants pourraient encore être disposés différemment et pas forcément les uns en face des autres. Tout autre dispositif remplissant la même fonction pourrait encore être utilisé. On peut par exemple penser à insérer entre l'extrémité de contact 401 et la zone de contact 402 une mousse très souple ne présentant quasiment pas de résistance à la mise en contact de ces surfaces mais permettant tout de même de pousser le corps 206 en espace libre. Il sera compris que ces solutions pourraient s'appliquer à tous les modes et à toutes les variantes de réalisation.

Sur la figure 11, on peut voir une variante de réalisation de la forme de la poignée. Cette variante est appliquée au dispositif des figures 6A et 6B, mais il sera compris qu'elle peut s'appliquer à tous les dispositifs. Cette variante forme une pince à retour d'effort.

Le manche a été remplacé par deux corps 1a et 1b mobiles en rotation autour de l'axe AP1. Chacun des corps 1a et 1b comporte une zone de saisie, désignée respectivement 101a et 101b. Le corps la est muni d'une extrémité de contact (non visible) logée dans une cavité et pouvant entrer en contact d'une zone de contact (non visible).Le degré de liberté additionnel autour de l'axe AP1 peut avantageusement être motorisé à l'aide d'un moteur MP1 pourvu d'un capteur de position CP1, qui peuvent être chacun de tous types décrit ci-dessus.

Alternativement les deux corps 1a et 1b pourraient être montés en translation l'un par rapport à l'autre.

On notera que pour cette variante, le moteur et le codeur peuvent être reliés au contrôleur via des câbles électriques volants ou cheminant le long du robot. La poignée peut également être avantageusement équipée d'une batterie rechargeable ou de piles pour alimenter le moteurMP1 et d'une carte équipée d'une transmission sans fil pour recevoir les ordres du contrôleur et lui renvoyer les informations du capteur de position. Cette variante de la poignée peut être utilisée dans tous les exemples de dispositifs décrits.

Il sera compris que l'on pourrait aussi équiper chacun des corps 1a et 1b d'une extrémité de contact, chacune d'elle étant en regard d'une zone de contact, sans sortir du cadre de l'invention. Dans ce cas il ne serait pas nécessaire de motoriser la poignée 1 et le moteur MP1 et le codeur CP1 pourraient être omis. Les zones de contact pourraient se trouver sur les corps terminaux de deux robots différents ou encore sur les corps terminaux d'un seul robot à chaine arborescente.

Il sera compris également que les formes de stylo ou de ciseaux de la poignée 1 ne sont données qu'à titre d'exemples. La poignée 1 pourrait également sans sortir du cadre de l'invention prendre n'importe quelle autre forme adaptée à une saisie et à une manipulation ergonomique. Elle peut par exemple et de manière non limitative avoir la forme d'une poignée pour prise de force, d'une poignée de joystick, d'un té, d'une boule, d'une souris, d'un pommeau, d'un volant ou d'un levier. Elle peut aussi avoir une forme creuse déformable ou non, comme par exemple un dé ou un anneau dans lequel on peut insérer un ou plusieurs doigts ou la paume ou toute la main. Elle peut encore être déformable comme par exemple une pince à deux branches. Il sera compris que ces solutions pourraient s'appliquer à tous les modes et à toutes les variantes de réalisation.

Les moyens de mesure de la configuration de la poignée, également appelés système de tracking vont maintenant être décrit.

Le système de tracking a pour but de mesurer soit la configuration absolue de la poignée dans l'espace, soit la configuration relative de la poignée 1 par rapport au robot 2 et, en particulier, par rapport au corps terminal 206. Ce système de tracking, dans le cas où il mesure la configuration absolue de la poignée, peut aussi mesurer la configuration absolue du corps terminal 206 du robot, configuration connue par ailleurs grâce aux capteurs du C1 à C6 du robot. Ces informations (configuration absolue de la poignée et du robot dans l'espace et configuration relative de la poignée par rapport au robot) sont utilisées par le contrôleur pour le couplage du bras maître, de l'interface haptique ou du cobot intégrant un dispositif selon la présente invention à un bras esclave ou une simulation en réalité virtuelle ou encore pour la gestion des modes d'assistance.

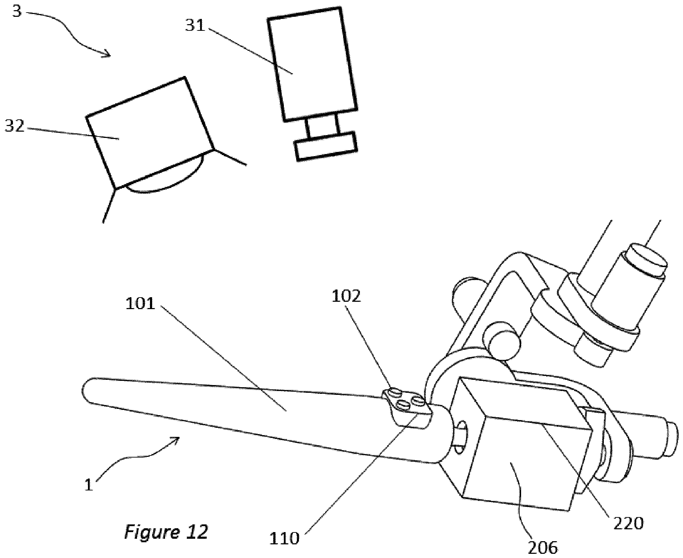

Sur la figure 12, on peut voir un premier mode de réalisation du système de tracking pouvant être mis en oeuvre dans la présente invention représenté de manière schématique, le système étant qualifié d"'externe".

Le système comporte une caméra 31 disposée de sorte à visualiser la poignée et le corps terminal. La caméra peut fonctionner dans n'importe quelle bande du spectre lumineux, en particulier dans le domaine de la lumière visible ou dans l'infrarouge. L'image obtenue par cette caméra est traitée pour en extraire les informations de position et d'orientation de la poignée. Cette caméra peut également avantageusement être utilisée pour mesurer en même temps la position et l'orientation du corps terminal 206 du robot. Ce système présente l'avantage de ne nécessiter aucun équipement supplémentaire sur la poignée et sur le robot.

Il peut avantageusement être prévu que la poignée et le corps terminal 206 comportent des arêtes vives 110, 220 plus facilement utilisables par les algorithmes de traitement d'image que les formes arrondies. Ces arêtes sont par exemple réalisées par usinage.

De préférence, on associe à la caméra un dispositif d'éclairage 32 venant renforcer le contraste de l'image dans le spectre de mesure de la caméra, l'éclairage délivré par le dispositif d'éclairage étant par exemple infrarouge. Ce dispositif d'éclairage peut être distinct de la caméra comme illustré sur la figure 12 ou intégrée autour de l'objectif.

La poignée et le corps 206 peuvent avantageusement être illuminés à l'aide d'une lumière structurée pour faciliter les mesures.

Il peut être prévu de mettre en oeuvre plusieurs caméra et/ou dispositifs d'éclairage disposés autour du robot et de la poignée, pour réaliser des mesures 3D, pour avoir une meilleure résolution et/ou encore pour éviter les angles morts et les occlusions visuelles.

Les images ainsi obtenues sont traitées par des techniques d'imagerie et des algorithmes de traitement d'images associés biens connus de l'homme de l'art et qui ne seront pas détaillés ici.

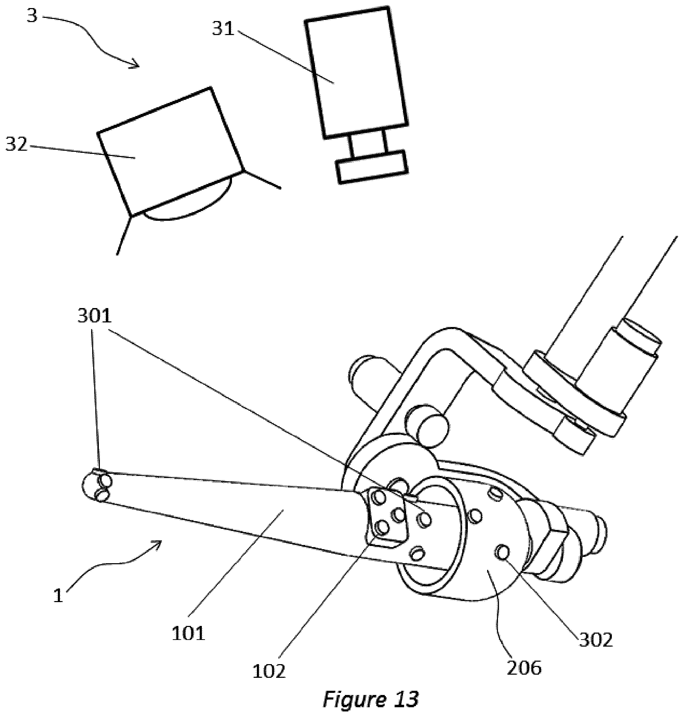

Sur la figure 13, on peut voir une variante de réalisation du système de la figure 12, dans laquelle des cibles 301 et 302 sont intégrées à la poignée 1 et au corps terminal 206 du robot. Ces cibles peuvent être passives, elles sont alors avantageusement rétro-réfléchissantes dans le spectre du dispositif d'éclairage 32. Alternativement, elles peuvent être actives, assurant leur propre éclairage, par exemple dans le domaine de l'infrarouge. De telles cibles actives peuvent avantageusement être pilotées pour envoyer chacune un signal spécifique, par exemple à une fréquence donnée, de manière à faciliter leur repérage et leur distinction par rapport aux autres cibles.

Dans le cas où des cibles actives sont prévues sur la poignée, la poignée peut avantageusement comporter les batteries ou piles nécessaires à leur alimentation électrique. De telles cibles sont plus faciles à repérer et facilitent la mesure de la configuration du système. Il est bien entendu que l'on pourrait n'intégrer des cibles que sur la poignée ou que sur le corps 206. On pourrait encore ici aussi utiliser plusieurs caméras pour effectuer les mesures.

On peut prévoir également d'utiliser des cibles passives et des cibles actives, par exemple des cibles passives sur la poignée ne nécessitant ainsi pas d'alimentation et des cibles actives sur le robot.

Par ailleurs les cibles peuvent présenter des formes et des tailles différentes pour aider à leur distinction, notamment dans le cas de cibles passives. De telles cibles peuvent encore être de couleurs différentes, ou comporter des motifs géométriques permettant de les distinguer plus facilement.

Grâce aux systèmes de tracking tels que schématisés sur les figures 12 et 13, on obtient les positions et orientations absolues de la poignée et du corps terminal du robot, dont on peut facilement déduire la configuration relative de la poignée par rapport au robot. Il est rappelé que les positions et orientations absolues du corps terminal du robot peuvent également être obtenues grâce aux capteurs du robot. Il n'est donc pas forcément utile de les mesurer avec le système de tracking 3 et on peut ne mesurer que la configuration de la poignée qui sera la seule à être éclairée ou munie de cibles.

Les systèmes de tracking illustrés par les figures 12 et 13 ne sont donnés qu'à titre d'exemples. D'une manière générale, on pourrait utiliser tout système de mesure sans contact comme par exemple et de manière non exhaustive : des systèmes de motion capture avec ou sans cibles comme les dispositifs ART Track ou Vicon Bonita, des capteurs électromagnétiques ou ultrasoniques comme les capteurs Polhemus, des trackeurs laser du type Leica Eye Tracker, des caméras field of view ou temps de vol comme les systèmes Kinect® ou le dispositif Leap Motion®.

Sur la figure 14, on peut voir représenté schématiquement un deuxième mode de réalisation d'un système de tracking adapté à la présente invention. Celui-ci est qualifié de "système de tracking interne".

Dans ce mode de réalisation, la poignée 1 et le corps terminal 206 du robot intègrent des capteurs sans contact permettant de connaître la configuration relative de la poignée par rapport au robot. La configuration absolue du corps terminal du robot étant connue à l'aide d'un modèle géométrique utilisant en entrée les valeurs des capteurs du robot, la configuration absolue de la poignée en est aisément déduite.

Dans la représentation de la figure 14, la poignée est équipée au niveau de la zone de contact 401 d'émetteurs 33 qui peuvent être par exemple des diodes électroluminescentes (LEDs) émettant dans le domaine de l'infrarouge et alimentées par des piles ou batteries avantageusement intégrées à la poignée. Ces LEDs sont avantageusement réparties régulièrement sur le pourtour de l'extrémité de contact 401. Dans le mode de réalisation représenté dans lequel l'extrémité de contact est cubique, une LED est prévue sur chacune des faces. En variante, plusieurs LEDs pourraient être prévues par face ou encore certaines faces pourraient ne pas être équipées de LEDs, celles-ci étant concentrées sur certaines parties seulement de l'extrémité de contact 401. La zone de contact 402 est quant à elle équipée, en regard des LEDs 33, de capteurs 34 sensibles à la distance au LEDs et / ou aux changements d'orientation des LEDs en regard, par exemple des phototransistors. Dans l'exemple représenté, ils sont au nombre de six (dont certains non visibles) disposés chacun sur une des faces de la zone 402. Le nombre de capteurs 34 et leur disposition dépendent du nombre de LEDs et de leur répartition sur l'extrémité de contact.

De préférence, les LEDs 33 et les capteurs 34 sont avantageusement intégrés dans des creux usinés dans l'extrémité de contact 401 et la zone de contact 402 de manière à ne pas être en saillie de leur surface et à ne pas gêner la phase de déplacement en espace libre et la mise au contact de ces surfaces. La combinaison des mesures des différents couples LED - capteur permet de calculer la configuration relative de la poignée par rapport au corps terminal 206. Il sera compris que les capteurs 34 pourraient à l'inverse se trouver sur la poignée et les LEDs 33 sur le corps terminal 206. On pourrait encore avoir certains capteurs sur la poignée et d'autres sur le corps 206 et certaines LEDs sur la poignée et d'autres sur le corps 206.

En variante, les phototransistors 34 pourraient être remplacés par des capteurs de déplacement PSD (Position Sensitive Detector en terminologie anglo-saxonne) linéaires ou surfaciques. Il sera compris qu'il pourrait y avoir un nombre différent de LEDs et de capteurs, certains capteurs comme les PSD surfaciques, bien connus de l'homme de l'art et dont le fonctionnement ne sera pas détaillé ici, pouvant mesurer des mouvements suivant plusieurs directions.

En variante également, des proximètres pourraient être utilisés à la place des ensembles LED-phototransistor. Ces composants intègrent sur un même composant un émetteur et un récepteur et fournissent directement une information sur la distance de l'objet en regard, sans qu'il soit nécessaire d'y fixer une cible. Dans ce cas ces proximètres pourraient être disposés tous sur la poignée, tous sur le corps 206 ou être répartis entre la poignée et le corps 206.

Selon une autre variante, on pourrait encore placer sur la poignée et sur le corps 206 des bobines parcourues par un courant et dont l'inductance mutuelle varie en fonction de leur distance, certaines bobines pouvant encore être remplacées par des aimants permanents. Dans ce cas les aimants seraient avantageusement placés sur la poignée et les bobines sur le corps 206.

Selon une autre variante, des surfaces conductrices pourraient être utilisées sur des parties en regard des zones 401 et 402 de manière à créer un condensateur dont la capacité varie en fonction de la distance que l'on cherche à mesurer.

D'une manière générale, le système de tracking pourrait mettre en oeuvre tous types de capteurs sans contact permettant d'apprécier la distance ou proximité d'une zone de la poignée par rapport au corps terminal du robot, utilisant par exemple et de manière non exhaustive des technologies électromagnétiques, ultrasoniques ou optiques, fonctionnant avec ou sans cible, en particulier des capteurs inductifs ou capacitifs ou des proximètres infrarouges. Il pourrait également mettre en oeuvre des systèmes de mesures mécaniques passifs entre la poignée 1 et le corps 206 tels que des pantins miniatures ayant des mobilités adaptées ou des structures déformables ayant des capteurs en nombre suffisant. Ces dispositifs sont connus et ne seront pas détaillés ici. Dans ce cas toutefois la transparence en espace libre serait réduite par rapport à un système sans contact.

Il sera compris qu'un système de tracking combinant plusieurs types de capteur ne sort pas du cadre de la présente invention, par exemple des accéléromètres et des capteurs optiques. En outre, quels que soient les capteurs retenus, le nombre de capteurs mis en oeuvre dépend du nombre de degrés de liberté du système et du nombre de mesures que peut fournir chaque capteur. Afin d'améliorer la qualité des mesures, le nombre de capteurs mis en oeuvre peut être supérieur à celui strictement requis.

Sur la figure 15, on peut voir une variante du système de tracking de la figure 14. Dans cette variante, les dispositifs de mesure 33-34 sont disposés en dehors de l'extrémité de contact 401 et de la zone de contact 402, ce qui simplifie la réalisation du dispositif. Par exemple, la poignée comporte des éléments 111 s'étendant transversalement par rapport à l'axe longitudinal, et portant des LEDs 33 disposées en regard du contour de l'ouverture de la cavité 403. Des capteurs PSD surfaciques 34 sont prévus sur le contour de l'ouverture de la cavité en regards des LEDs. Les éléments 111 s'étendant transversalement sont formés dans l'exemple représenté de trois bras répartis angulairement de manière régulière autour de l'axe du manche. Ces composants ne sont donnés qu'à titre d'exemple et on pourrait utiliser tout autre moyen de mesure tel que ceux présentés ci-dessus. On pourrait également utiliser plus de systèmes de mesure ou les agencer différemment sur la poignée et sur le corps 206.

Les systèmes de tracking décrits ci-dessus s'appliquent à tous les dispositifs de commande décrits.

Il peut être prévu que la poignée et/ou le corps 206 soient équipés de moyens de détection d'un contact entre eux. On peut par exemple et comme cela est illustré par la figure 14 utiliser un circuit électrique composé d'un fil souple 35, d'une batterie ou d'une pile 36, d'un capteur de courant 37 et des zone et extrémité de contact 401 et 402 qui seront avantageusement recouvertes d'une fine couche de matériau conducteur. Le fil 35 circule du matériau conducteur de l'extrémité de contact 401 au matériau conducteur de la zone de contact 402 via les éléments 36 et 37 (il est représenté en traits pointillés aux endroits où il passe à l'intérieur de la poignée et du corps 206). Ainsi lorsque les surfaces 401 et 402 sont séparées, le circuit est ouvert et aucun courant ne passe dans le capteur 37. Au contraire, lorsque ces surfaces sont en contact, le courant passe et est détecté par le capteur 37. Cette information de contact peut ensuite être utilisée par le contrôleur.

Ce dispositif très simple est donné à titre d'exemple. Tout autre moyen de vérifier le contact pourrait être utilisé, par exemple des contacteurs, des interrupteurs ou des capteurs de pression ou de force disposés sur la poignée et/ou le corps 206. En variante, ces moyens de détection de contact peuvent être un système annexe optique, magnétique ou électromagnétique, un ou des capteurs de contact ou d'effort comme des jauges de contrainte ou un matériau piézoélectrique, un ou des capteurs de déplacement et / ou de déformation d'une pièce mécanique,...

Nous allons maintenant décrire un deuxième mode de réalisation de l'invention dans lequel des moyens pour solidariser provisoirement la poignée sur le corps principal sont prévus.

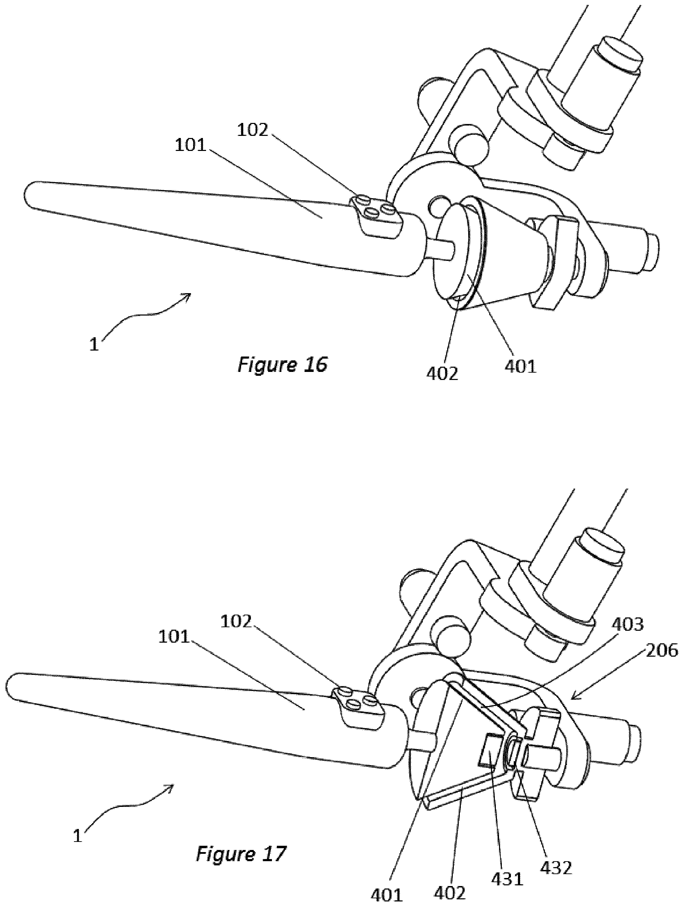

Sur la figure 16, on peut voir un premier exemple de ce deuxième mode de réalisation qui se rapproche de l'exemple du premier mode de réalisation représenté sur les figures 4A et 4B. L'extrémité de contact 401 a une forme tronconique et la cavité 403 dont la surface intérieure forme la zone de contact 402 a également une forme tronconique. Cependant dans cet exemple de réalisation, l'angle au sommet des cônes définissant la surface extérieure de l'extrémité de contact et la surface intérieure de la zone de contact sont tels qu'une fois mises en contact, il est nécessaire d'appliquer un certain effort pour les désolidariser. On pourra avantageusement choisir la pente du cône, le couple de matériaux et l'état de surface des zones 401 et 402 de sorte que la séparation des deux pièces requière un effort connu donné. Ainsi en dessous de cet effort la poignée pourra être considérée comme solidaire du robot et on pourra lui transmettre des efforts dans toutes les directions, à la fois en translation et en rotation.

Sur la figure 17, on peut voir une variante de réalisation du second mode de réalisation. Dans cette variante, la solidarisation de la poignée et du corps terminal n'est pas obtenue par coincement de deux surfaces tronconiques mais au moyen d'un dispositif de solidarisation intégré sur la poignée et sur le corps 206, ce dispositif de solidarisation étant à seuil ou commandable et comportant des éléments 431 et 432. L'élément 432 situé dans le fond de la cavité 403 peut par exemple être un aimant et l'élément 431 situé à l'extrémité libre de l'extrémité de contact 401 peut comporter au moins une partie en un matériau métallique. Ainsi lorsque l'extrémité de contact 401 et la zone de contact 402 arrivent à proximité, les éléments 431 et 432 vont s'attirer et solidariser la poignée et le corps 206 tant que l'on n'exerce pas sur eux des efforts opposés suffisants pour décoller l'aimant 432 et la pièce 431. En alternative, l'aimant pourrait être situé sur la poignée et le matériau magnétique sur le corps 206. On pourrait encore utiliser deux aimants dont les pôles opposés se font face. Ce dispositif de solidarisation est un dispositif à seuil. Dans le cas où ce phénomène de seuil ne serait pas souhaité, on peut avantageusement mettre en oeuvre un système commandable à deux états. On pourrait par exemple utiliser un système comprenant un aimant 431 avantageusement placé sur la poignée et une bobine 432 placée sur le corps 206, de manière à pouvoir être alimentée facilement. Ainsi si aucun courant ne circule dans la bobine, la poignée et le corps 206 sont libres de se détacher tandis que si un courant circule dans la bobine, la poignée et le corps 206 sont maintenus en contact par un effort généré par l'interaction entre les champs magnétiques de l'aimant et de la bobine.

En variante, un dispositif à ventouse magnétique pourrait être utilisé. De tels dispositifs sont connus de l'homme de l'art et ne seront pas détaillés ici. En variante encore, un dispositif de solidarisation commandable tel que celui décrit dans le document US2011073118 pourrait être mis en oeuvre dans la présente demande.

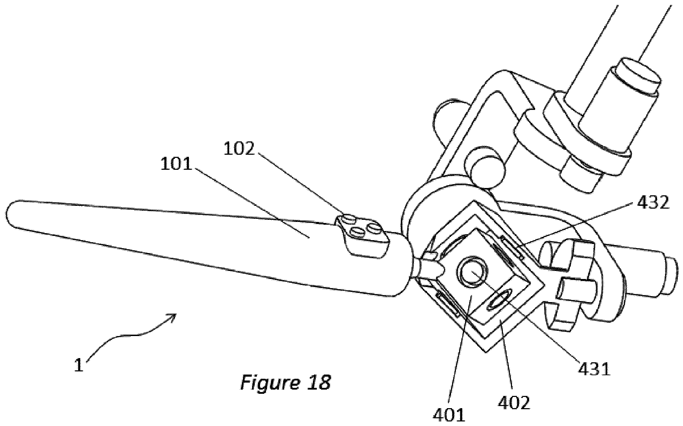

La figure 18 illustre une deuxième variante du second mode de réalisation du dispositif. Dans cette variante, l'extrémité de contact et la zone de contact sont parallélépipédiques et plusieurs dispositifs de solidarisation 431 et 432 sont intégrés sur le pourtour de leur surface. Ainsi il sera possible de solidariser la poignée 1 et le robot 2 quelle que soit la portion des zones 401 et 402 en contact. Il sera compris que tous les types de dispositif de solidarisation décrits ci-dessus peuvent être appliqués.

De manière non exhaustive, les solutions suivantes de dispositifs de solidarisation peuvent être mises en oeuvre : une des surfaces pourrait être lisse, l'autre équipée de ventouses ou de systèmes à dépression pneumatique, les deux surfaces pourraient aussi être pourvues de bandes Velcro®, ou l'une au moins d'entre elles être enduite d'une colle ou d'un polymère adhérant.

Lors du fonctionnement d'un dispositif selon la présente invention comportant un dispositif de solidarisation piloté, on utilise l'information de distance de l'avatar, du robot esclave ou du cobot à son environnement pour commander le dispositif de solidarisation, de sorte à solidariser la poignée et le robot au moment où l'avatar, le robot esclave ou le cobot entre en contact avec leur environnement.

Nous allons maintenant décrire des exemples de robots pouvant être mis en oeuvre dans le dispositif de commande selon l'invention.

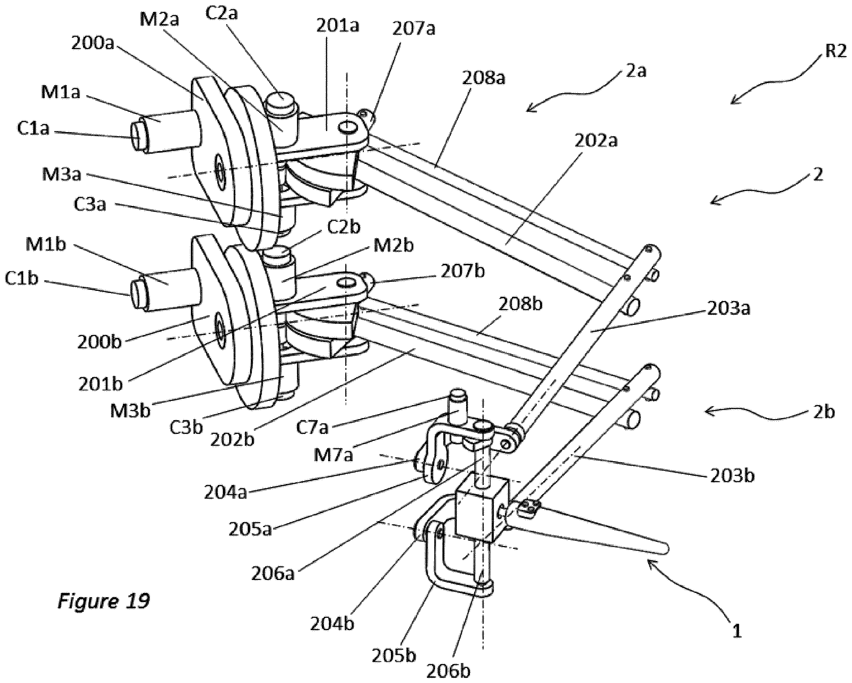

Sur la figure 19, on peut voir un robot hybride à 6 degrés de liberté comportant des corps terminaux portant une zone de contact coopérant avec une poignée selon l'invention.

Le robot R2 comporte deux branches 2a et 2b comprenant respectivement des corps 200a à 208a pour la branche 2a et 200b à 208b pour la branche 2b. Chaque branche a une structure semblable aux robots présentés précédemment, sauf qu'elle ne comporte que 4 moteurs pour la branche 2a et 3 moteurs pour la branche 2b, mais elle pourrait également avoir une structure différente. Les branches 2a et 2b sont disposées en parallèle et reliées au niveau de leurs organes terminaux 206a et 206b. Le corps 206a est mobile en rotation par rapport au corps 205a, le corps 206b est mobile en rotation par rapport au corps 205b et le corps 206a est mobile en rotation par rapport au corps 206b. Les axes de ces liaisons sont avantageusement colinéaires. Dans l'exemple représenté, la zone de contact 402 est située sur le corps 206a. En variante, elle pourrait être située sur le corps 206b si c'était la branche 2b qui était équipée de 4 moteurs et la branche 2a qui n'était équipée que de 3 moteurs. La zone de contact ainsi que la poignée 1 sont ici semblables à celles des figures 6A et 6B.

La branche 2a est équipée de moteurs M1a à M3a pourvus de capteurs de position C1a à C3a. La branche 2b est équipée de moteurs M1b à M3b pourvus de capteurs de position C1b à C3b. En permettant de déplacer les extrémités des deux branches et/ou d'appliquer un effort sur ces extrémités dans la même direction, ces moteurs permettent d'assurer un retour d'effort sur 3 degrés de liberté en translation. En permettant de déplacer les extrémités des deux branches et/ou d'appliquer un effort sur ces extrémités dans des directions opposées, ils permettent d'assurer un retour d'effort sur 2 degrés de liberté en rotation autour d'axes perpendiculaires aux corps 206a et 206b. Un moteur supplémentaire M7a équipé d'un capteur C7A est disposé sur le corps 205a et assure le retour d'effort autour de l'axe des corps 206a et 206b.

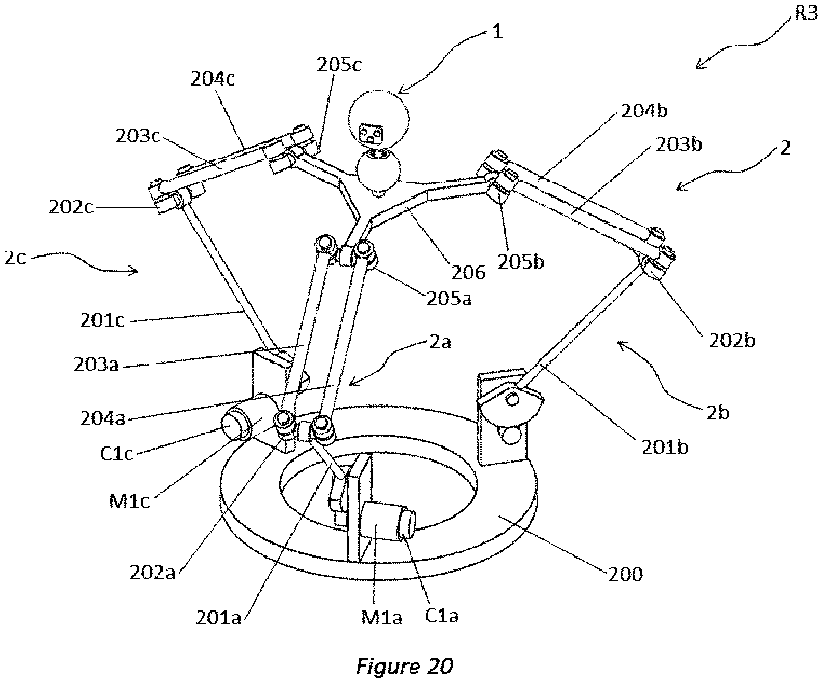

Sur la figure 20, on peut voir un autre exemple de robot à architecture parallèle à 3 degrés de liberté à retour d'effort de type "Delta modifié" tel que décrit dans l'article Y. Tsumaki, H. Naruse, D.N. Nenchev, M. Uchiyama, Design of a compact 6-DOF haptic interface, Proc. IEEE Int. Conf. on Robotics and Automation, Louvain, Belgique, Mai 1998*.* Le robot R3 comporte trois branches 2a, 2b et 2c disposées en parallèles et reliant la base 200 à la plate-forme mobile 206. Les branches 2a, respectivement 2b et 2c comportent des corps mobiles 201a, 202a, 203a, 204a, 205a, respectivement 201b, 202b, 203b, 204b, 205b et 201c, 202c, 203c, 204c, 205c. Le retour d'effort est assuré par les moteurs M1a sur la branche 2a, M1b sur la branche 2b et M1c sur la branche 2c, équipés de capteurs de position C1a, C1b et C1c (sur la figure 20, le moteur M1b et le capteur de position C1b de la branche 2b ne sont pas visibles). Les moteurs sont tous les trois fixés sur la base et actionnent les corps 201a, 201b et 201c par l'intermédiaire de réducteurs non référencés pour ne pas alourdir la figure. Cette architecture est bien connue de l'homme de l'art et son fonctionnement ne sera pas détaillé ici.

Cette architecture ne permet de déplacer la plate-forme 206 qu'en translation. L'agencement spécifique des liaisons entre les corps est tel que la plate-forme 206 ne peut pas se déplacer en rotation. Lorsque l'utilisateur est en espace libre, le robot est contrôlé de telle sorte que l'extrémité de contact et la zone de contact, dont la configuration relative est mesurée par le système de tracking, n'entrent pas en contact entre elles. Lorsque l'utilisateur arrive au contact, le contrôleur commande les moteurs pour que la poignée entre en contact avec le robot. Enfin, au contact, ces deux éléments restent en contact entre eux. Dans l'exemple présenté sur la figure 20, la zone de saisie de la poignée 1 a avantageusement la forme d'une boule plus compacte et plus ergonomique qu'un stylet pour commander le système en translation.

De plus, dans ce type de dispositif à 3 degrés de liberté, l'extrémité de contact de la poignée 1 et la zone de contact de la plate-forme 206 sont avantageusement de forme sphérique comme celles représentés sur les figures 5A et 5B. L'utilisateur peut ainsi tourner librement la poignée autour d'un axe ici vertical. Il peut également tourner librement la poignée autour de n'importe quel axe horizontal, tant que la partie amincie 103 de la poignée n'entre pas en contact avec le pourtour de l'ouverture 209 de la cavité 403. Ainsi même si l'utilisateur modifie légèrement l'orientation de la poignée en déplaçant le système en espace libre, cela ne provoquera pas de contact entre la poignée et le corps du robot.

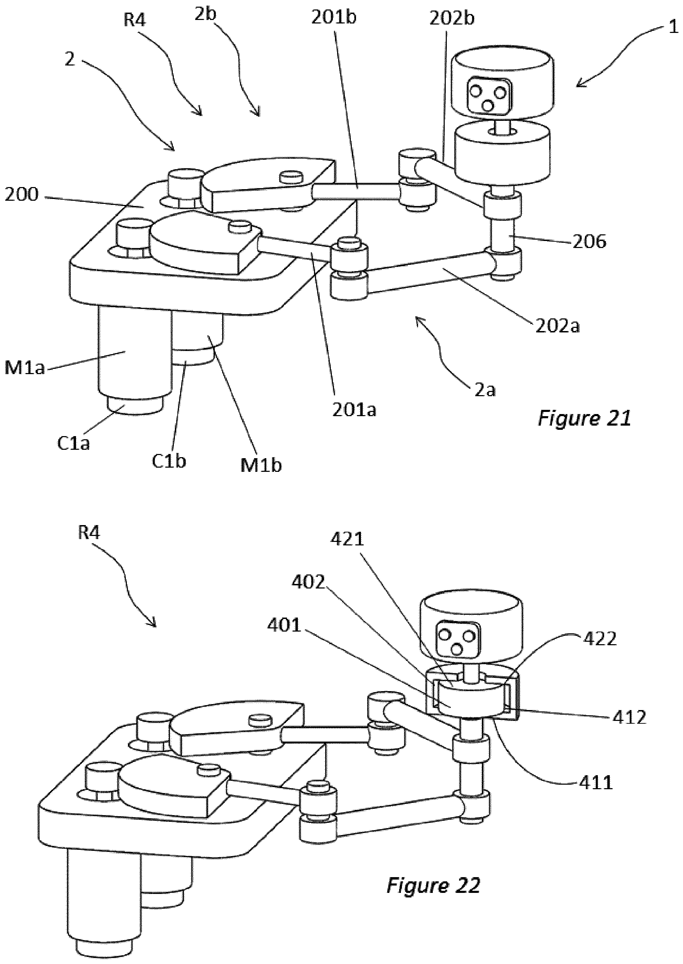

Sur les figures 21 et 22, on peut voir un autre exemple de robot présentant deux degrés de liberté pouvant être mis en oeuvre dans un dispositif selon la présente invention. Le robot R4 comporte de deux branches 2a et 2b reliant une base 200 à une pièce mobile d'extrémité 206. Les branches comportent des corps 201a et 202a, respectivement 201b et 202b. Des moteurs M1a et M1b équipés de capteurs de position C1a et C1b permettent d'appliquer un effort sur le corps terminal 206 dans le plan. Cette structure parallèle à 2 degrés de liberté de type mécanisme à 5 barres est bien connue de l'homme de l'art et son fonctionnement ne sera pas détaillé ici. Elle n'est présentée qu'à titre d'exemple. Toute autre structure à 2 degrés de liberté, en particulier des structures séries ou des structures parallèles, par exemple de type parallélogramme, pourrait aussi être utilisée.

Sur la figure 22, on peut voir une vue en coupe partielle de la poignée et de la zone de contact du dispositif de la figure 21. La poignée a globalement une forme de cylindre, qui offre une assez bonne ergonomie pour un déplacement dans le plan. Toute autre forme pourrait être utilisée, comme par exemple une forme de souris informatique. L'extrémité de contact 401 de la poignée 1 et la zone de contact 402 du corps terminal 206 du robot ont quant à elles une forme cylindrique, respectivement mâle et femelle. Sur cet exemple, la hauteur des deux cylindres est la même tandis que leur diamètre diffère. Celui de l'extrémité de contact 401 est légèrement inférieur à celui de la zone de contact 402. Ainsi toute rotation de la poignée est impossible, sauf autour d'un axe vertical, et l'utilisateur ne peut la déplacer que dans le plan.

Les plans inférieur 411 et supérieur 421 de la zone de contact 401 et les plans inférieur 412 et supérieur 422 de la zone de contact 402 peuvent avantageusement être réalisés dans des matériaux présentant peu de frottements entre eux, comme par exemple du Téflon®, afin d'opposer une résistance faible, voire nulle au mouvement relatif de la poignée par rapport au corps terminal dans le plan lors de leur mise en contact ou de leur séparation.

Alternativement ou en combinaison avec la mise en oeuvre de matériaux offrant des frottements faibles, on pourrait également lubrifier ces surfaces pour minimiser encore les frottements. Alternativement ou en combinaison aux moyens cités ci-dessus, on pourrait aussi insérer des billes entre ces surfaces.

Alternativement également l'extrémité de contact 401 et la zone de contact 402 pourraient avoir une forme de parallélépipède et le corps 202a ou 202b pourrait être pourvu d'un moteur permettant d'appliquer un couple sur le corps 206. Dans ce cas le robot R4 aurait 3 degrés de liberté à retour d'effort dans le plan, deux en translation et un en rotation.

Les exemples de robots présentés ci-dessus présentent 6 degrés de liberté dont 3 à 6 à retour d'effort (figure 2), 6 degrés de liberté (figure 19), 3 degrés de liberté permettant d'agir ponctuellement dans l'espace (figure 20) et 3 degrés de liberté dont deux ou trois à retour d'effort pour interagir dans le plan (figures 21 et 22). Mais le robot pourrait être redondant, avec plus de 6 axes motorisés et une structure série ou non. Il pourrait aussi avoir une architecture parallèle, par exemple de type plate-forme de Gough-Stewart. Il pourrait également avoir une architecture hybride, par exemple à deux branches en parallèle et un axe en série comme présenté dans l'article F. Gosselin, F. Ferlay, S. Bouchigny, C. Mégard, F. Taha, Specification and design of a new haptic interface for maxillo facial surgery, Proc. IEEE Int. Conf. on Robotics and Automation, 9-13 mai 2011, Shanghai, Chine, pp. 737-744*,* ou avec un porteur de type Delta et un poignet série comme dans l'article Y. Tsumaki, H. Naruse, D.N. Nenchev, M. Uchiyama, Design of a compact 6-DOF haptic interface, Proc. IEEE Int. Conf. on Robotics and Automation, Louvain, Belgique, Mai 1998*.* On pourrait encore utiliser une architecture à câbles tendus 3D ou 6D comme présenté dans les articles M. Ishii, M. Sato, A 3D Spatial Interface Device Using Tensed Strings, Presence : Teleoperators and Virtual Environments, Vol. 3 (1), pp. 81-86, 1994*,* S. Kim, Y. Koike, M. Sato, Tension based 7 DOFs force feedback device : SPIDAR-G, Trans. on Control, Automation and Systems Engineering, Vol.4, No.1, Mars 2002*,* et M. Ortega, S. Coquillart, Prop-based haptic interaction with co-location and immersion : an automotive application, Proc. IEEE Int. Workshop on Haptic Audio Visual Environments and their Applications, Ottawa, Canada, 1-2 oct. 2005*.* On pourrait également utiliser une architecture anthropomorphe comme sur les orthèses du membre supérieur. Ces exemples sont donnés à titre indicatifs et ne sont pas limitatifs.

Nous allons maintenant décrire un troisième mode de réalisation de l'invention, dans lequel la zone de contact est déformable.

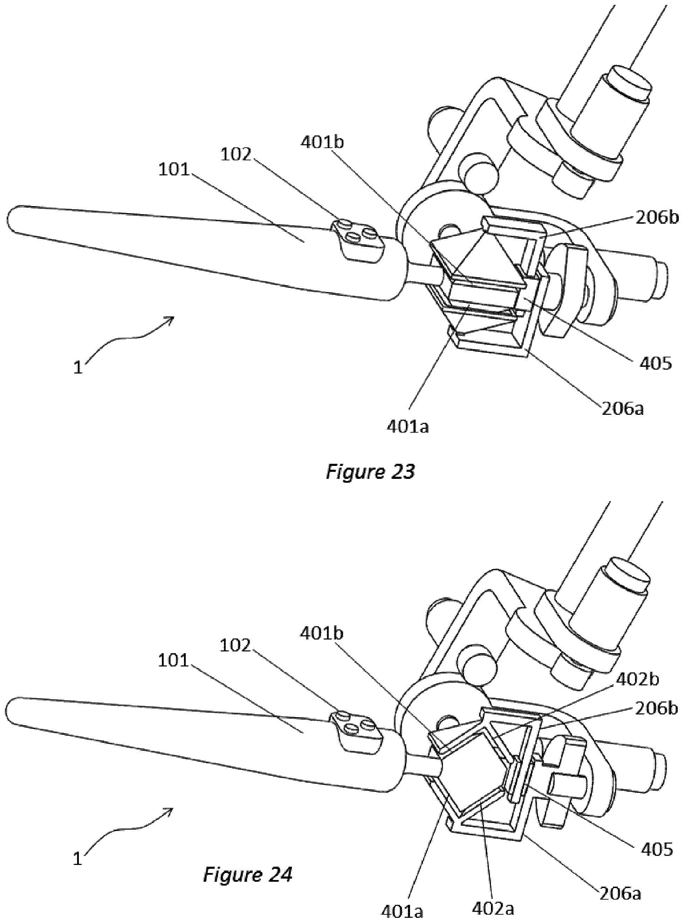

Sur la figure 23, on peut voir un exemple d'un dispositif de commande selon le troisième mode de réalisation dans lequel la zone de contact est rendue déformable, au moins du côté de la poignée et/ou du corps 206.

La structure et le fonctionnement de ce dispositif sera mieux compris en se référant à la figure 24 qui représente une vue en coupe partielle du dispositif de la figure 23.

L'extrémité du robot présente la forme d'un C et comporte deux corps 206a, 206b. Le premier corps 206a est solidaire de la poulie P62 et entrainé par le moteur M6 et le second corps 206b est mobile en translation par rapport au corps 206a. Le corps 206b est entrainé par un moteur 405, de sorte à permettre d'éloigner ou de rapprocher les corps 206a et 206b.

Il est bien compris que les corps 206a et 206b pourraient également être tous les deux mobiles par rapport à la poulie P62 sans sortir du cadre de l'invention. Dans ce cas ils seraient actionnés chacun par un moteur ou tous les deux de façon synchronisée par le même moteur.

La structure des deux corps 206a, 206b est telle qu'ils définissent entre eux une zone de contact avec l'extrémité de contact de la poignée.

L'extrémité de contact présente une forme telle qu'elle coopère avec les deux corps 206a, 206b.

Le premier corps 206a définit une première zone de la zone de contact totale, désignée 402a et le deuxième corps définit une deuxième zone de la zone de contact, désignée 402b.

L'extrémité de contact comporte une première extrémité 401a pouvant coopérer avec la première zone 402a et une deuxième extrémité 401b pouvant coopérer avec la deuxième zone 402b.

L'extrémité de contact est disposée par rapport aux corps 206a, 206b de sorte que la première extrémisé 401a est en regard de la première zone 402a et la deuxième extrémité 401b est en regard de la zone 402b.

Ainsi, en espace libre, le moteur 405 est commandé de sorte que les corps 206a et 206b sont relativement éloignés l'un de l'autre. Ainsi les première et deuxième extrémités de contact 401a et 401b ne peuvent pas facilement entrer en contact avec les première 402a et deuxième 402b zones de contact. Lorsque le robot arrive au contact, le moteur 405 est commandé pour que les corps 206a et 206b se rapprochent, de sorte que la première extrémité de contact 401a et la première zone de contact 402a se rapprochent et que la deuxième extrémité de contact 401b et la deuxième zone de contact 402b, se rapprochent également, jusqu'à être en contact. Ainsi au contact, la poignée est solidaire du robot tandis qu'en espace libre ces deux éléments sont séparés. Dans l'exemple représenté, le moteur 405 est un moteur linéaire mais il pourrait également s'agir d'un moteur rotatif. Ce moteur peut avantageusement être pourvu d'un capteur de position (non représenté). D'une manière plus générale, le moteur 405 et les corps 206a et 206b forment une pince qui peut venir se fermer autour de la ou des zone(s) de contact de la poignée. Toute autre solution pour réaliser cette pince pourrait être utilisée sans sortir du cadre de l'invention. Ces pinces pourraient également être utilisées pour tout type de formes des zones de contact. On pourrait en particulier utiliser des première et deuxième extrémités de contact 401a, 401b et des première et deuxième zones de contact 402a, 402b coniques. Les extrémités de contact 401a, 401b et les zones de contact 402a, 402b pourraient encore être planes et maintenues par simple pincement au contact. La zone de contact pourrait encore comporter plus d'une première et deuxième zone de contact comme cela sera décrit par la suite.

Ce mode de réalisation permet de gérer au mieux les transitions entre espace libre et mise en contact, puisqu'il permet d'avoir une distance faible entre les surfaces 401 et 402 à proximité du contact, une distance nulle au contact et une distance importante entre ces surfaces en espace libre.

Lorsque la zone de contact est modifiable, on utilise l'information de distance du dispositif piloté à son environnement et l'information de distance de la poignée par rapport au robot pour piloter la configuration de la zone de contact. Ainsi, sur le dispositif des figures 23 et 24, on peut par exemple piloter le moteur 405 pour que la distance entre les zones de contact 402a, 402b et les extrémités de contact 401a, 401b, soit égale à la distance entre le robot et son environnement dès que le dispositif piloté s'approche du contact. On est ainsi assuré que la distance entre la poignée et le robot sera nulle dès que le dispositif piloté entre en contact avec son environnement. Cette étape de commande est représentée en pointillés sur l'organigramme de la figure 29.

Il sera compris qu'il serait également possible que ce soit la configuration relative des extrémités de contact qui soit modifiable et non celle des zones de contact. Il serait encore possible qu'à la fois la configuration relative des extrémités de contact et celle des zones de contact soient modifiables. Par ailleurs toute autre méthode ou loi de commande, linéaire ou non, basée sur toute information utile, permettant de faire varier la distance entre les extrémités de contact et les zones de contact pourrait être utilisée sans sortir du cadre de l'invention. Il sera également compris qu'une approche similaire est utilisable pour toutes les variantes où l'extrémité de contact et / ou la zone de contact est pilotable.

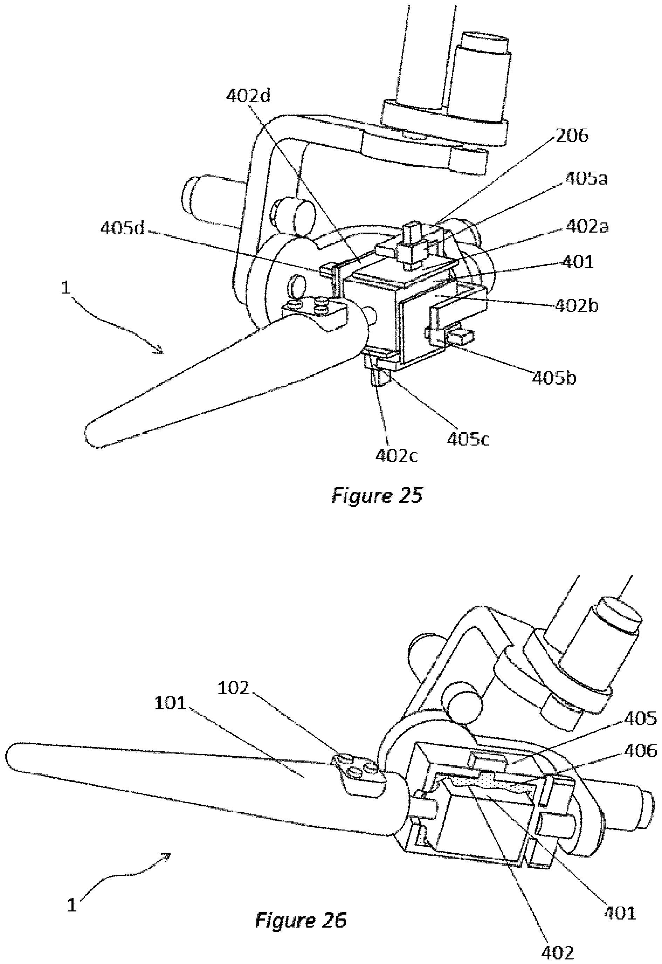

Sur la figure 25, on peut voir un autre exemple de réalisation du troisième mode de réalisation dans lequel la zone de contact est formé d'une première 402a, d'une deuxième 402b, d'une troisième 402c et d'une quatrième 402d zone de contact. Ces quatre zones de contact sont dans l'exemple représenté formées chacune par un plan mobile en translation par rapport au corps 206 et actionnées par des moteurs 405a, 405b, 405c et 405d de sorte à modifier leur distance à l'extrémité de contact 401 de la poignée 1 qui est ici parallélépipédique mais qui pourrait prendre toute autre forme, sous réserve que les zones 402a à 402d soient adaptées.

Le fonctionnement de ce dispositif est semblable à celui du dispositif des figures 23 et 24. En espace libre, les moteurs 405a à 405d sont commandés pour que les surfaces 402a à 402d soient éloignées des faces de l'extrémité de contact 401. Au contact, ils sont commandés pour que ces zones de contact soient au contact des faces de l'extrémité de contact.

D'une manière générale, ces surfaces composant la zone de contact déformable réalisent un diaphragme qui vient se refermer sur l'extrémité de la poignée. Toute autre solution pour réaliser un tel diaphragme pourrait être utilisée sans sortir du cadre de l'invention, en particulier celles ayant pour principe de synchroniser les mouvements des différentes pièces mobiles. Toute autre forme serait aussi possible pour la zone de contact. Par exemple une zone de contact en forme de pyramide ou de sphère déformable ne sort pas du cadre de la présente invention.

Sur la figure 26, on peut voir représentée une autre variante du troisième mode de réalisation de la zone de contact vue en coupe partielle.

Le corps terminal 206 comporte sur sa face interne une surface souple servant de zone de contact 402. Le volume compris entre la face interne du corps 206 et cette surface 402 est avantageusement rempli d'une poudre fine comme par exemple et de manière non limitative du sable fin, de la limaille de fer, de la poudre de noyaux d'abricots ou du marc de café. Une pompe 405 et un réservoir (non représenté) fixés sur le corps 206 ou déportés par exemple sur la base du robot assurent, sur commande, le remplissage et la vidange de ce volume. Ainsi en espace libre on aspire de la poudre de manière à libérer de l'espace autour de la zone de contact 401 de la poignée. Au contact, au contraire, on injecte de la poudre de manière à plaquer la surface 402 sur la surface 401. En alternative, on garde une quantité de poudre sensiblement identique mais on injecte de l'air ou au contraire on fait le vide pour rendre la poudre déformable ou la solidifier.

Il sera compris que ce pourrait aussi être la surface de contact 401 de la poignée qui pourrait être déformable, par exemple gonflée au contact pour venir au contact de la surface 402. La surface déformable pourrait encore se trouver en dehors des surfaces 401 et 402. Elle pourrait par exemple être liée au corps 206 et entourer une partie de la zone 101 ou être liée à la zone 101 et entourer une partie du corps 206.

Les dispositifs des figures 23 à 26 ne sont donnés qu'à titre d'exemple. D'autres dispositifs aptes à modifier la distance entre les extrémités de contact de la poignée et des zones de contact du corps terminal du robot de sorte qu'elles soient éloignées en espace libre et contigües au contact pourrait être utilisés sans sortir du cadre de l'invention.

Comme cela a été expliqué ci-dessus, puisque l'avatar, le robot esclave ou l'effecteur du cobot est bloqué au contact de son environnement, le déplacement de la poignée jusqu'à venir au contact du robot peut être vue comme une pénétration dans l'environnement ou un dépassement de la poignée par rapport à l'avatar, au robot ou au cobot. Ce dépassement est d'autant plus faible que la distance entre l'extrémité de contact 401 et la zone de contact 402 est faible. Grâce à la mise en oeuvre de zones de contact et/ou d'extrémités de contact modifiables, il est possible de ne pas avoir de dépassement du tout en réduisant cette distance à zéro au contact. La distance entre les extrémités et les zones de contact étant modifiable, on peut aussi avoir une distance importante en espace libre pour que le robot puisse suivre les mouvements de l'utilisateur même s'il a une dynamique limitée.

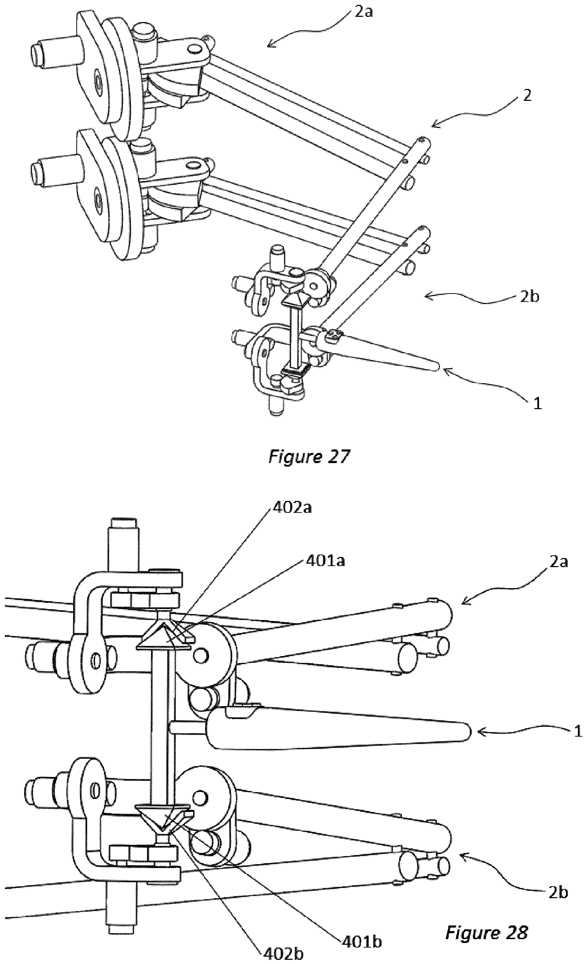

Sur les figures 27 et 28, on peut voir un exemple de dispositif de commande comprenant plusieurs zones de contact distinctes. Le robot de la figure 27 est un robot parallèle 2 à deux branches 2a et 2b, chaque branche 2a, 2b portant une zone de contact 402a, 402b respectivement. La poignée 1 comporte deux extrémités de contact 401a, 401b.

Les zones de contact 402a, 402b sont disposées dans l'exemple représenté de sorte à se faire face, la poignée 1 étant destinée à être disposée entre ces deux zones de contact 402a, 402b, chaque extrémité de contact 401a, 401b de la poignée en regard d'une zone de contact. Dans cet exemple, les extrémités de contact 401a, 401b sont de forme pyramidale et les zones de contact ont une forme correspondante. Toute autre forme permettant d'appliquer un retour d'effort multidirectionnel peut convenir.

Sur la figure 27, les deux branches du robot ont 6 degrés de liberté avantageusement tous actionnés, ce qui permet à chaque branche de suivre les mouvements de la poignée en espace libre et d'appliquer sur elle des efforts au contact. On pourrait ne pas actionner certains ou tous les axes du poignet des branches 2a et 2b. Dans ce cas les corps terminaux des deux branches suivraient la poignée en rotation soit par leur mise en contact avec la poignée lorsque celle-ci est inclinée, soit en intégrant avantageusement sur ces axes des dispositifs d'auto-alignement avec la poignée tel que ceux présentés sur la figure 10. Cette disposition présente l'avantage de permettre de régler facilement la distance entre les extrémités des branches 2a et 2b et la poignée 1 en pilotant les deux robots.

Cette configuration de robot n'est donnée qu'à titre d'exemple et on pourrait utiliser des robots différents ou encore utiliser plus de 2 zones de contact. On pourrait ainsi par exemple développer un robot à 3 branches en parallèle reliées à la poignée par 3 zones de contact sans sortir du cadre de l'invention.

Il sera compris que les différents modes et variantes de réalisation du robot, de la poignée, du système de tracking et de la zone de contact/extrémité de contact peuvent être combinés sans sortir du cadre de l'invention.

La présente invention permet de réaliser des interfaces haptiques parfaitement transparentes en espace libre. En outre, elle permet de réaliser des interfaces haptiques fonctionnant de manière classique au contact, avec en particulier des efforts bilatéraux dans les 6 directions de l'espace. De plus, elle est simple à mettre en oeuvre et peut être adaptée sur les interfaces existantes.

Le dispositif selon l'invention est adapté à la réalisation de tout dispositif devant réaliser des mouvements complexes tout en présentant une grande transparence, tel que par exemple et de manière non limitative des interfaces haptiques, des cobots, des exosquelettes ou des robots en interaction avec l'homme via un outil ou une poignée.

Ces systèmes sont par exemple particulièrement adaptés aux simulateurs et systèmes de formation en chirurgie et dans le monde médical. Ces applications font en effet intervenir des opérations effectuées à l'aide d'outils (scalpels, fraise, ...), ce qui est une caractéristique de notre invention.

Grâce à l'invention, il est possible de réaliser une interface haptique avec une masse apparente et des frottements apparents minimaux en espace libre tout en fournissant des efforts importants au contact, ce qui est un souhait des chirurgiens. En outre on peut prévoir d'équiper plusieurs préhenseurs. Il est alors très facile d'en changer puisque le préhenseur peut ne pas être lié à l'outil. On peut ainsi simuler facilement des interventions requérant l'utilisation successive de plusieurs outils.

## Revendications

1. Dispositif de commande à retour d'effort comportant:
- une poignée (1) destinée à être manipulée par l'utilisateur, ladite poignée (1) comportant au moins une zone de saisie (101) par l'utilisateur et au moins une extrémité de contact (401) solidaire de la zone de saisie au moins pendant une partie du fonctionnement du dispositif de commande,
- un robot (2) muni d'au moins un corps terminal (206) comportant au moins une zone de contact (402), ladite zone de contact (402) pouvant entrer en contact avec l'extrémité de contact (401) de la poignée (1),
- des moyens de mesure (3) de la configuration relative de la poignée (1) par rapport au corps terminal (206),
- un contrôleur (5) apte à gérer le déplacement de la zone de contact (402) par rapport à l'extrémité de contact (401) dans un état de fonctionnement sans contact, dans un état de fonctionnement de mise en contact de la zone de contact (402) et de l'extrémité de contact (401) et dans un état de fonctionnement en contact lors duquel un retour d'effort peut être appliqué à la poignée (1) par l'intermédiaire de l'extrémité de contact (401),
- l'extrémité de contact (401) étant mobile par rapport à la zone de contact (402) pendant au moins une partie du fonctionnement du dispositif de commande,
dans lequel l'extrémité de contact (401) et la zone de contact (402) ont des formes telles que la zone de contact (402) est apte à appliquer des efforts sur l'extrémité de contact (401) dans au moins deux directions distinctes de sorte que le robot applique à la poignée (1) un retour d'effort dans lesdites au moins deux directions distinctes.

2. Dispositif de commande à retour d'effort selon la revendication 1, dans lequel l'extrémité de contact (401) ou la zone de contact (402) forme une cavité et la zone de contact (402) ou l'extrémité de contact (401) une forme telle qu'elle loge au moins en partie dans ladite cavité.

3. Dispositif de commande à retour d'effort selon la revendication 2, dans lequel un jeu existe entre les surfaces intérieures de ladite cavité de l'extrémité de contact (401) ou de la zone de contact (402) et les surfaces extérieures de la zone de contact (402) ou de l'extrémité de contact (401), de sorte que le déplacement relatif de l'extrémité de contact et de la zone de contact est limitée dans toutes les directions.

4. Dispositif de commande selon l'une des revendications 1 et 2, dans lequel la zone de contact (402) ou l'extrémité de contact (401) forme une cavité de laquelle l'extrémité de contact (401) ou la zone de contact (402) est libre de sortir.

5. Dispositif de commande à retour d'effort selon l'une des revendications 1 à 4, dans lequel la zone de contact (402) et/ou l'extrémité de contact (401) présentent une forme fixe.

6. Dispositif de commande à retour d'effort selon l'une des revendications 1 à 4, dans lequel la zone de contact et/ou l'extrémité de contact sont déformables.

7. Dispositif de commande à retour d'effort selon la revendication 6, dans lequel la zone de contact et/ou l'extrémité de contact sont délimitées par plusieurs surfaces (402a, 402b, 402c, 402d) dont une au moins est mobile par rapport aux autres surfaces.

8. Dispositif de commande à retour d'effort selon la revendication 6 ou 7, dans lequel la zone de contact et/ou l'extrémité de contact sont formées au moins en partie par une paroi souple, la mise en contact entre la zone de contact et l'extrémité de contact étant assuré au moins en partie par la déformation de la paroi souple.

9. Dispositif de commande à retour d'effort selon l'une des revendications 1 à 8, dans lequel les moyens de mesure (3) comportent une caméra ou une caméra temps de vol disposée de sorte à filmer la poignée (1) et le corps terminal (206), la poignée (1) et/ou le corps terminal (206) pouvant comporter au moins une cible de repérage (301,302), des moyens de traitement des images fournies par la caméra et avantageusement un dispositif d'éclairage.

10. Dispositif de commande à retour d'effort selon l'une des revendications 1 à 8, dans lequel les moyens de mesure (3) sont disposés sur la poignée et le corps terminal, lesdits moyens de mesure comportant des éléments de repérage (33) sur la poignée (1) ou le corps terminal (206) et des capteurs (34) desdits éléments de repérage.

11. Dispositif de commande à retour d'effort selon l'une des revendications 1 à 10, comportant des moyens de solidarisation provisoire (431, 432) de la poignée et du corps terminal.

12. Dispositif de commande à retour d'effort selon la revendication 11, dans lequel les moyens de solidarisation provisoire sont tels que la solidarisation est supprimée lorsqu'un effort suffisant est appliqué sur l'extrémité de contact ou dans lequel les moyens de solidarisation provisoire sont commandables de sorte à permettre une annulation de la solidarisation sur commande.

13. Dispositif de commande à retour d'effort selon l'une des revendications 1 à 12, comportant des moyens de détection du contact entre l'extrémité de contact (401) et la zone de contact (402).

14. Dispositif de commande à retour d'effort selon l'une des revendications 1 à 13, comportant au moins deux zones de contact (402a, 402b) et au moins deux extrémités de contact (401a, 401b), les deux zones de contact (402a, 402b) étant mobiles l'une par rapport à l'autre et/ou les deux extrémités de contact (401a, 401b) étant mobiles l'un par rapport à l'autre.

15. Interface haptique comportant un dispositif de commande à retour d'effort selon l'une des revendications 1 à 14 et un logiciel de simulation.

16. Système robot maître et robot esclave comportant un dispositif de commande à retour d'effort selon l'une des revendications 1 à 14 et un robot esclave, le robot maître étant formé par le robot du dispositif de commande.

17. Robot collaboratif comportant un dispositif de commande à retour d'effort selon l'une des revendications 1 à 14 et un effecteur agissant sur l'environnement, monté sur le corps terminal ou sur un corps distinct.

## Patentansprüche

1. Steuerungsvorrichtung mit Kraftrückkopplung, enthaltend:
- einen Griff (1), der dazu bestimmt ist, von einem Benutzer gehandhabt zu werden, wobei der Griff (1) zumindest einen Greifbereich (101) zum Ergreifen durch den Benutzer und zumindest ein Kontaktende (401) aufweist, das zumindest während eines Teils des Betriebs der Steuerungsvorrichtung fest mit dem Greifbereich verbunden ist,
- einen Roboter (2), der mit zumindest einem Abschlusskörper (206) versehen ist, der zumindest einen Kontaktbereich (402) aufweist, wobei der Kontaktbereich (402) mit dem Kontaktende (401) des Griffs (1) in Kontakt gelangen kann,
- Messeinrichtungen (3) zum Messen der relativen Stellung des Griffs (1) bezüglich des Abschlusskörpers (206),
- ein Kontrollgerät (5), das dazu geeignet ist, die Verlagerung des Kontaktbereichs (402) bezüglich des Kontaktendes (401) in einem kontaktlosen Betriebszustand, einem Betriebszustand zum Inkontaktbringen des Kontaktbereichs (402) mit dem Kontaktende (401) und in einem kontaktierten Betriebszustand zu steuern, bei dem über das Kontaktende (401) eine Kraftrückkopplung auf den Griff (1) erfolgen kann,
- wobei das Kontaktende (401) zumindest während eines Teils des Betriebs der Steuerungsvorrichtung bezüglich des Kontaktbereichs (402) beweglich ist,
wobei das Kontaktende (401) und der Kontaktbereich (402) solche Formen haben, dass der Kontaktbereich (402) dazu geeignet ist, Kräfte auf das Kontaktende (401) in zumindest zwei verschiedenen Richtungen aufzubringen, so dass der Roboter eine Kraftrückkopplung in den zumindest zwei verschiedenen Richtungen auf den Griff (1) aufbringt.

2. Steuerungsvorrichtung mit Kraftrückkopplung nach Anspruch 1, wobei das Kontaktende (401) bzw. der Kontaktbereich (402) einen Hohlraum bildet und der Kontaktbereich (402) bzw. das Kontaktende (401) eine solche Form hat, dass er bzw. es zumindest teilweise in dem Hohlraum aufgenommen wird.

3. Steuerungsvorrichtung mit Kraftrückkopplung nach Anspruch 2, wobei zwischen den Innenflächen des Hohlraums des Kontaktendes (401) bzw. des Kontaktbereichs (402) und den Außenflächen des Kontaktbereichs (402) bzw. des Kontaktendes (401) ein Spiel besteht, so dass die relative Verlagerung von Kontaktende und Kontaktbereich in sämtlichen Richtungen begrenzt wird.

4. Steuerungsvorrichtung nach einem der Ansprüche 1 und 2, wobei der Kontaktbereich (402) bzw. das Kontaktende (401) einen Hohlraum bildet, aus welchem das Kontaktende (401) bzw. der Kontaktbereich (402) frei heraustreten kann.

5. Steuerungsvorrichtung mit Kraftrückkopplung nach einem der Ansprüche 1 bis 4, wobei der Kontaktbereich (402) und/oder das Kontaktende (401) eine feste Form aufweisen.

6. Steuerungsvorrichtung mit Kraftrückkopplung nach einem der Ansprüche 1 bis 4, wobei der Kontaktbereich und/oder das Kontaktende verformbar sind.

7. Steuerungsvorrichtung mit Kraftrückkopplung nach Anspruch 6, wobei der Kontaktbereich und/oder das Kontaktende von mehreren Flächen (402a, 402b, 402c, 402d) eingegrenzt werden, von denen zumindest eine bezüglich der weiteren Flächen beweglich ist.

8. Steuerungsvorrichtung mit Kraftrückkopplung nach Anspruch 6 oder 7, wobei der Kontaktbereich und/oder das Kontaktende zumindest teilweise von einer nachgiebigen Wand gebildet werden, wobei das Inkontaktbringen zwischen dem Kontaktbereich und dem Kontaktende zumindest teilweise durch Verformung der nachgiebigen Wand sichergestellt wird.

9. Steuerungsvorrichtung mit Kraftrückkopplung nach einem der Ansprüche 1 bis 8, wobei die Messeinrichtungen (3) eine Kamera bzw. eine Laufzeitmesskamera enthalten, die so angeordnet ist, dass sie den Griff (1) und den Abschlusskörper (206) filmt, wobei der Griff (1) und/oder der Abschlusskörper (206) zumindest eine Ortungszielscheibe (301, 302), Einrichtungen zum Verarbeiten der von der Kamera bereitgestellten Bilder und vorteilhaft eine Beleuchtungsvorrichtung enthalten können.

10. Steuerungsvorrichtung mit Kraftrückkopplung nach einem der Ansprüche 1 bis 8, wobei die Messeinrichtungen (3) am Griff und am Abschlusskörper angeordnet sind, wobei die Messeinrichtungen Ortungselemente (33) am Griff (1) oder am Abschlusskörper (206) und Sensoren (34) für die Ortungselemente aufweisen.

11. Steuerungsvorrichtung mit Kraftrückkopplung nach einem der Ansprüche 1 bis 10, enthaltend Einrichtungen (431, 432) zur vorübergehenden Verbindung von Griff und Abschlusskörper.

12. Steuerungsvorrichtung mit Kraftrückkopplung nach Anspruch 11, wobei die Einrichtungen zur vorübergehenden Verbindung derart sind, dass die Verbindung aufgehoben wird, wenn eine ausreichende Kraft auf das Kontaktende aufgebracht wird, oder wobei die Einrichtungen zur vorübergehenden Verbindung so steuerbar sind, dass sie eine Aufhebung der Verbindung auf Kommando gestatten.

13. Steuerungsvorrichtung mit Kraftrückkopplung nach einem der Ansprüche 1 bis 12, enthaltend Einrichtungen zum Detektieren des Kontakts zwischen dem Kontaktende (401) und dem Kontaktbereich (402).

14. Steuerungsvorrichtung mit Kraftrückkopplung nach einem der Ansprüche 1 bis 13, enthaltend zumindest zwei Kontaktbereiche (402a, 402b) und zumindest zwei Kontaktenden (401a, 401b), wobei die beiden Kontaktbereiche (402a, 402b) zueinander beweglich sind und/oder die beiden Kontaktenden (401a, 401b) zueinander beweglich sind.

15. Haptische Schnittstelle mit einer Steuerungsvorrichtung mit Kraftrückkopplung nach einem der Ansprüche 1 bis 14 und mit einer Simulationssoftware.

16. System aus Master-Roboter und Slave-Roboter mit einer Steuerungsvorrichtung mit Kraftrückkopplung nach einem der Ansprüche 1 bis 14, wobei der Master-Roboter aus dem Roboter der Steuerungsvorrichtung besteht.

17. Kollaborativer Roboter mit einer Steuerungsvorrichtung mit Kraftrückkopplung nach einem der Ansprüche 1 bis 14 und einem auf die Umgebung einwirkenden Effektor, der an den Abschlusskörper oder an einen anderen Körper angebracht ist.

## Claims

1. Control device with force feedback comprising:
- a handle (1) intended to be operated by the user, said handle (1) comprising at least one grab area (101) for taking hold by the user and at least one contact end (401) secured to the grab area during at least part of the operation of the control device,
- a robot (2) provided with at least one terminal body (206) comprising at least one contact area (402), said contact area (402) being able to come into contact with the contact end (401) of the handle (1),
- means for measuring (3) the relative configuration of the handle (1) relative to the terminal body (206),
- a controller (5) capable of managing the movement of the contact area (402) relative to the contact end (401) in an operating state without contact, in an operating state of placing in contact the contact area (402) and the contact end (401) and in an operating state in contact during which a force feedback may be applied to the handle (1) through the contact end (401),
- the contact end (401) being movable relative to the contact area (402) during at least part of the operation of the control device,
wherein the contact end (401) and the contact area (402) are shaped such that the contact area (402) is capable of applying forces to the contact end (401) in at least two separate directions such that the robot applies to the handle (1) a force feedback in said at least two separate directions.

2. Control device with force feedback according to claim 1, wherein the contact end (401) or the contact area (402) form a cavity and the contact area (402) or the contact end (401) is shaped such that it is housed at least in part in said cavity.

3. Control device with force feedback according to claim 2, wherein a play exists between the inner surfaces of said cavity of the contact end (401) or the contact area (402) and the outer surfaces of the contact area (402) or the contact end (401), such that the relative movement of the contact end and the contact area is limited in all directions.

4. Control device according to one of claims 1 and 2, wherein the contact area (402) or the contact end (401) form a cavity from which the contact end (401) or the contact area (402) is free to exit.

5. Control device with force feedback according to one of claims 1 to 4, wherein the contact area (402) and/or the contact end (401) have a fixed shape.

6. Control device with force feedback according to one of claims 1 to 4, wherein the contact area and/or the contact end are deformable.

7. Control device with force feedback according to claim 6, wherein the contact area and/or the contact end are delimited by several surfaces (402a, 402b, 402c, 402d) of which at least one is movable relative to the other surfaces.

8. Control device with force feedback according to claim 6 or 7, wherein the contact area and/or the contact end are formed at least in part by a flexible wall, the placing in contact between the contact area and the contact end being ensured at least in part by the deformation of the flexible wall.

9. Control device with force feedback according to one of claims 1 to 8, wherein the measurement means (3) comprise a camera or a time of flight camera arranged so as to film the handle (1) and the terminal body (206), means for processing the images supplied by the camera and advantageously a lighting device and wherein the handle (1) and/or the terminal body (206) can comprise at least one locating target (301, 302)..

10. Control device with force feedback according to one of claims 1 to 8, wherein the measurement means (3) are arranged on the handle and the terminal body, said measurement means comprising locating elements (33) on the handle (1) or the terminal body (206) and sensors (34) of said locating elements.

11. Control device with force feedback according to one of claims 1 to 10, comprising temporary securing means (431, 432) of the handle and the terminal body.

12. Control device with force feedback according to claim 11, wherein the temporary securing means are such that the securing is eliminated when a sufficient force is applied to the contact end or wherein the temporary securing means are controllable so as to enable a cancellation of the securing on command.

13. Control device with force feedback according to one of claims 1 to 10, comprising means for detecting contact between the contact end (401) and the contact area (402).

14. Control device with force feedback according to one of claims 1 to 13, comprising at least two contact areas (402a, 402b) and at least two contact ends (401a, 401b), the two contact areas (402a, 402b) being movable with respect to each other and/or the two contact ends (401a, 401b) being movable with respect to each other.

15. Haptic interface comprising a control device with force feedback according to one of claims 1 to 14 and a simulation software.

16. Master robot and slave robot system comprising a control device with force feedback according to one of claims 1 to 14 and a slave robot, the master robot being formed by the robot of the control device.

17. Collaborative robot comprising a control device with force feedback according to one of claims 1 to 14 and an effector acting on the environment, mounted on the terminal body or on a separate body.
